# EUROPEAN PATENT APPLICATION

(11) **EP 4 804 675 A1**
(43) Date of publication of application: **09.09.2026**
(21) Application number: 24896471.0
(22) Date of filing: 25.11.2024
(51) Int. Cl.: H04W 72/0446

(54) **COMMUNICATION METHOD AND COMMUNICATION APPARATUS**

(30) Priority: 29.11.2023 CN 202311626855
(71) Applicant: Huawei Technologies Co., Ltd., Shenzhen, Guangdong 518129 (CN)
(72) Inventor: WANG, Xiaolu, Shenzhen, Guangdong 518129 (CN); LUO, Hejia, Shenzhen, Guangdong 518129 (CN); WANG, Jun, Shenzhen, Guangdong 518129 (CN); TONG, Wen, Shenzhen, Guangdong 518129 (CN)
(74) Representative: Goddar, Heinz J.
(86) International application number: PCT/CN2024/134222
(87) International publication number: WO 2025/113382

(57) **Abstract**

This application provides a communication method and a communication apparatus. In the method, a first relay node receives routing information and time-frequency resource information. The routing information is used to determine a second relay node, and the time-frequency resource information indicates a time-frequency resource for data transmission between the first relay node and the second relay node. Based on the time-frequency resource information, the first relay node performs the data transmission with the second relay node. Both nodes may be terrestrial or satellite relay nodes. Data transmission between a terminal device and a network device passes through at least two relay nodes (for example, the first relay node and the second relay node). This solution supports dynamic route changes of relay nodes, enabling long-distance transmission between the terminal device and the network device with guaranteed transmission performance.

## Description

This application claims priority to Chinese Patent Application No. 202311626855.0, filed with the China National Intellectual Property Administration on November 29, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Non-terrestrial networks (non-terrestrial networks, NTNs), such as satellite communication systems, offer significant advantages, including global coverage, long-distance transmission, flexible networking, convenient deployment, and independence from geographical limitations. They have been widely used in various fields such as maritime communication, positioning and navigation, disaster relief, scientific experiments, video broadcasting, and earth observation.

In a satellite system, using uplink transmission as an example, a terminal device sends data to a gateway/terrestrial station via an inter-satellite link, and then the gateway forwards the data to a core network/base station. Information transmitted between the terminal device and the network device needs to be forwarded by satellite devices (also referred to as relay nodes) on the inter-satellite link. Currently, beam directions used by relay nodes for forwarding information are fixed, and all beams are wide beams. Consequently, the signal-to-noise ratio of forwarding is low. Therefore, how to improve transmission performance between the terminal device and the network device is currently a hot research topic.

### SUMMARY

This application provides a communication method and a communication apparatus that implement a multi-hop forwarding mechanism to ensure transmission performance.

According to a first aspect, a communication method is provided. The method may be performed by a first relay node. The first relay node herein may be the first relay node, or may be a processor, a module, a chip, a chip system, or the like that is in the first relay node and that implements the method. This is not limited in this application. The method includes the following steps.

The first relay node receives routing information and time-frequency resource information. The routing information is used to determine a second relay node, and the time-frequency resource information indicates a time-frequency resource for data transmission between the first relay node and the second relay node. The first relay node performs the data transmission with the second relay node based on the time-frequency resource information. The first relay node is a terrestrial relay node or a satellite relay node, and the second relay node is a terrestrial relay node or a satellite relay node.

It should be understood that, the time-frequency resource is used for the data transmission between the first relay node and the second relay node. The time-frequency resource may include a time-frequency resource used by the first relay node to send information to the second relay node, or the time-frequency resource may include a time-frequency resource used by the second relay node to receive information from the first relay node, or the time-frequency resource includes the time-frequency resource used by the first relay node to send the information to the second relay node and the time-frequency resource used by the second relay node to receive the information from the first relay node.

It should be further understood that the data transmission in this application may be uplink transmission or downlink transmission. This is not limited in this application.

It should be further understood that the routing information and the time-frequency resource information may be carried in a same piece of information for transmission, or may be carried in different information for transmission.

According to the method provided in this application, the first relay node performs the data transmission with the second relay node based on the received routing information and time-frequency resource information. The first relay node and the second relay node each may be a terrestrial relay node or a satellite relay node. In the technical solution of this method, data transmission between a terminal device and a network device is performed via at least two relay nodes (for example, the first relay node and the second relay node), and a dynamic route change of the relay node is supported, to implement long-distance transmission between the terminal device and the network device, and ensure transmission performance.

In addition, the first relay node and the second relay node may be terrestrial relay nodes or satellite relay nodes. In this method, the terrestrial relay node may be used for the transmission, so that hardware costs and complexity of a satellite can be reduced.

With reference to the first aspect, in some possible implementations, the routing information includes: identification information of a destination relay node and identification information of a forwarding path; identification information of a forwarding path; identification information of the second relay node; satellite ephemeris information of the second relay node; position information of the second relay node; a forwarding port of the first relay node, where the forwarding port corresponds to the second relay node. It should be understood that the routing information includes the identification information of the destination relay node and the identification information of the forwarding path. To be specific, the first relay node may determine the forwarding path based on the identification information of the forwarding path, and the first relay node determines the second relay node based on the forwarding path and identification information of a destination node. The destination node may be a destination node on the forwarding path, or another node (non-destination node) on the forwarding path. This is not limited in this application. For example, the destination node may be the second relay node, and the second relay node is not the destination node on the forwarding path.

It should be further understood that the routing information includes the identification information of the forwarding path. To be specific, the first relay node may determine the forwarding path based on the identification information of the forwarding path, and determine a next relay node (for example, the second relay node) based on the forwarding path and the first relay node.

Based on the foregoing technical solution, the first relay node determines the second relay node based on content of the routing information. The first relay node can quickly determine the second relay node, to reduce a data forwarding delay.

With reference to the first aspect, in some possible implementations, that the first relay node performs the data transmission with the second relay node based on the time-frequency resource information includes: The first relay node determines a forwarding mode. The forwarding mode includes a regenerative forwarding mode or a transparent forwarding mode. The first relay node performs the data transmission with the second relay node based on the forwarding mode and the time-frequency resource information.

It should be understood that the forwarding mode may be represented in a form of a bitmap. For example, when a value of a bit is "1", it may indicate the regenerative forwarding mode; and when the value of the bit is "0", it may indicate the transparent forwarding mode. Alternatively, when the value of the bit is "0", it may indicate the regenerative forwarding mode; and when the value of the bit is "1", it may indicate the transparent forwarding mode.

Based on the foregoing technical solution, when the first relay node performs the data transmission with the second relay node, the first relay node determines whether to perform the data transmission with the second relay node in the transparent forwarding mode or the regenerative forwarding mode, to indicate a transmission mode between the first relay node and the second relay node.

With reference to the first aspect, in some possible implementations, that the first relay node determines the forwarding mode includes: The first relay node determines the forwarding mode based on first information. The first information includes the forwarding mode. Alternatively, the first relay node determines the forwarding mode by performing blind detection and/or decoding on a time-frequency resource of second information. The second information includes information transmitted between the network device and the terminal device.

Based on the foregoing technical solution, the forwarding mode may be explicitly indicated or implicitly indicated. In an explicit indication manner, for example, the first relay node receives the first information including the forwarding mode, where the first information includes the transparent forwarding mode or the regenerative forwarding mode; and in an implicit indication manner, the first information does not include the forwarding mode, and the first relay node needs to determine the forwarding mode by performing the blind detection and/or decoding on the time-frequency resource of the second information. For example, when the first relay node performs blind detection and/or decoding on the second information, if the first relay node can perform the blind detection and/or decoding on the time-frequency resource of the second information, the first relay node may perform the data transmission in the regenerative forwarding mode; and if the first relay node fails to perform blind detection and/or decoding on the time-frequency resource of the second information, the first relay node may perform the data transmission in the transparent forwarding mode. Compared with a method in which a forwarding mode is indicated by using information, determining the forwarding mode through blind detection and/or decoding can reduce signaling overheads.

With reference to the first aspect, in some possible implementations, that the first relay node performs the data transmission with the second relay node based on the forwarding mode and the time-frequency resource information includes: The first relay node performs the data transmission with the second relay node based on the time-frequency resource information and the transparent forwarding mode and/or the regenerative forwarding mode.

The forwarding mode corresponding to the time-frequency resource of the second information may include a plurality of forwarding modes, that is, the regenerative forwarding mode is used for a part of the time-frequency resource of the second information, and the transparent forwarding mode is used for the other part of the time-frequency resource.

It should be understood that the forwarding mode corresponding to the time-frequency resource of the second information may be one mode (for example, the regenerative forwarding mode or the transparent forwarding mode) or a plurality of forwarding modes. When the forwarding mode corresponding to the time-frequency resource of the second information is one forwarding mode, the second information may be transmitted in the regenerative forwarding mode or in the transparent forwarding mode. The forwarding mode corresponding to the time-frequency resource of the second information is a plurality of forwarding modes, for example, two forwarding modes, which are respectively transparent forwarding and regenerative forwarding. A part (for example, control information) of the second information may be transmitted in the regenerative forwarding mode, and the other information (for example, data information) may be transmitted in the transparent forwarding mode.

With reference to the first aspect, in some possible implementations, when the forwarding mode is the transparent forwarding mode, that the first relay node performs the data transmission with the second relay node based on the forwarding mode and the time-frequency resource information includes: The first relay node performs transmission of the second information with the second relay node based on the transparent forwarding mode and the time-frequency resource information; and when the forwarding mode is the regenerative forwarding mode, that the first relay node performs the data transmission with the second relay node based on the forwarding mode and the time-frequency resource information includes: The first relay node performs transmission of third information with the second relay node based on the regenerative forwarding mode and the time-frequency resource information. The third information is determined based on the second information and the regenerative forwarding mode.

It should be understood that when the forwarding mode is the transparent forwarding mode, the first relay node may perform the data transmission with the second relay node in the transparent forwarding mode. For example, the first relay node may send the second information to the second relay node in the transparent forwarding mode, or the first relay node receives the second information sent by the second relay node in the transparent forwarding mode. When the forwarding mode is the regenerative forwarding mode, the first relay node may perform the data transmission with the second relay node in the regenerative forwarding mode. For example, the first relay node may determine the third information based on the second information and the regenerative forwarding mode, and send the third information to the second relay node. Alternatively, the first relay node receives the third information sent by the second relay node in the regenerative forwarding mode. The third information is determined based on the second information and the regenerative forwarding mode.

It should be further understood that the first relay node and the second relay node may have a regenerative forwarding function and/or a transparent forwarding function. The data transmission is performed based on the functions of the first relay node and the second relay node and the determined forwarding mode.

For example, the first relay node is a relay node for regenerative transmission, and the first relay node includes the regenerative forwarding function. That the first relay node performs the data transmission with the second relay node based on the forwarding mode and the time-frequency resource information includes: The first relay node performs the transmission of the third information with the second relay node based on the forwarding mode and the time-frequency resource information. The third information is determined based on the second information and the regenerative forwarding mode.

With reference to the first aspect, in some possible implementations, the method further includes: The first relay node receives a forwarding direction. The forwarding direction includes an uplink forwarding direction or a downlink forwarding direction. That the first relay node performs the data transmission with the second relay node based on the time-frequency resource information includes: The first relay node performs the data transmission with the second relay node based on the time-frequency resource information and the forwarding direction.

It should be understood that the first relay node may determine the second relay node based on the forwarding direction and the routing information, and perform the data transmission with the second relay node based on the time-frequency resource information and the forwarding direction. When the first relay node performs the data transmission with the second relay node based on the time-frequency resource information and the forwarding direction, the first relay node performs the data transmission with the second relay node based on the time-frequency resource indicated by the time-frequency resource information and the forwarding direction corresponding to the time-frequency resource.

It should be understood that the forwarding direction may be represented in a form of a bitmap. For example, when a value of a bit is "1", it may indicate the uplink forwarding direction; and when the value of the bit is "0", it may indicate the downlink forwarding direction. Alternatively, when the value of the bit is "0", it may indicate the uplink forwarding direction; and when the value of the bit is "1", it may indicate the downlink forwarding direction.

It should be understood that the forwarding direction and at least one of the routing information, the time-frequency resource information, and the first information may be carried in a same piece of information for transmission, or may be carried in separate information for transmission.

It should be further understood that the forwarding direction may include the uplink forwarding direction or the downlink forwarding direction. The uplink/downlink forwarding direction is determined based on whether data transmitted between the network device and the terminal device is sent by the network device or sent by the terminal device. The forwarding direction may alternatively indicate the relay node to perform forward forwarding or backward forwarding. Whether the forward forwarding or the backward forwarding is performed may be determined based on a direction of the forwarding path.

With reference to the first aspect, in some possible implementations, the routing information includes routing information of the first relay node, and the method further includes: The first relay node performs the transmission of the second information based on the routing information, the time-frequency resource, and the forwarding mode. The second information is the information transmitted between the terminal device and the network device. The routing information further includes any one of the following: a beam position index, position information of the terminal device, identification information of the terminal device, an index number of the terminal device, a beam index, a reference position, or angle information (for example, an elevation angle or an azimuth angle) of a beam.

It should be understood that the routing information includes the routing information of the first relay node, and the routing information can be used to determine a direction of a receive beam and/or a direction of a transmit beam. The direction of the receive beam and/or the direction of the transmit beam may be determined based on one or more of the beam position index, the position information of the terminal device, the identification information of the terminal device, the index number of the terminal device, the beam index, the reference position, or the angle information (for example, the elevation angle or the azimuth angle) of the beam in the routing information. The reference position may be a position of a reference point within beam coverage.

With reference to the first aspect, in some possible implementations, the method further includes: The first relay node receives forwarding frequency information. The forwarding frequency information indicates information about a frequency used by the first relay node to forward the data transmission. That the first relay node performs the data transmission with the second relay node based on the time-frequency resource information includes: The first relay node performs the data transmission with the second relay node based on the time-frequency resource information and the forwarding frequency information.

It should be understood that the first relay node performs the data transmission with the second relay node based on the time-frequency resource information and the forwarding frequency information, and the first relay node performs the data transmission with the second relay node based on the time-frequency resource indicated by the time-frequency resource information and a forwarding frequency corresponding to the time-frequency resource.

It should be understood that a frequency at which the first relay node receives forwarded information may be the same as or different from a frequency at which the first relay node sends the forwarded information. For example, the first relay node receives the forwarded information at a frequency #1 based on the time-frequency resource information, and the first relay node forwards the information at a frequency #2 based on the time-frequency resource information. The frequency #2 is different from the frequency #1. The frequency #2 may be determined by the first relay node to adapt to link budget requirements of different transmit power, or the frequency #2 is determined by the first relay node to adapt to signal transmission capabilities of different hardware. A specific manner of determining the frequency is not limited in this application.

It should be further understood that the frequency #2 may alternatively be pre-configured via a base station, or predefined via a system.

The forwarding frequency information in this application may also be referred to as frequency information, a forwarding frequency, a frequency, or the like.

Based on the foregoing technical solution, that the first relay node performs the data transmission with the second relay node based on the time-frequency resource information may include: The first relay node determines the second relay node based on the routing information, and performs, based on the time-frequency resource information and the frequency information, the data transmission with the second relay node on the corresponding time-frequency resource based on the frequency information; or the first relay node determines the second relay node based on the routing information, and the first relay node performs the data transmission with the second relay node based on the time-frequency resource information, the forwarding mode, and the frequency information; or the first relay node determines the second relay node based on the routing information and the forwarding direction, and performs the data transmission with the second relay node based on the time-frequency resource, the forwarding mode, and the frequency information. The first relay node may determine the second relay node based on the routing information, or based on information such as the routing information and the forwarding direction. When the first relay node performs the data transmission with the second relay node, the first relay node may determine a forwarding mode of the data transmission, a position of the time-frequency resource for the transmission, the forwarding frequency, and/or the like based on one or more of the time-frequency resource, the forwarding direction, or the frequency information.

It should be understood that, in this application, the first relay node performs the data transmission with the second relay node based on the time-frequency resource information. The first relay node determines the second relay node based on the routing information. The first relay node may alternatively perform the data transmission with the second relay node based on one or more of the forwarding direction, the forwarding mode, or the frequency information. A person skilled in the art may determine, in different manners based on one or more of the foregoing information disclosed in this application, one or more of a mode of the data transmission between the first relay node and the second relay node, an occupied time-frequency resource, or an occupied frequency. Details are not listed one by one in this application.

With reference to the first aspect, in some possible implementations, the first relay node includes a mobile termination MT, a distributed unit DU, and a transparent forwarding unit. The MT is configured to establish a first link. The first link is used by the MT to connect to a distributed unit of an upper-level device, and the first link is a control link. The DU is configured to establish a second link. The second link is used to provide access for a mobile termination MT of a lower-level device. The second link is a control link. The transparent forwarding unit is configured to provide a transparent forwarding function.

It should be understood that the first relay node may include the MT, the DU, and the transparent forwarding unit, and the first relay node has a transparent forwarding function, and may further have a regenerative forwarding function.

In a possible implementation, the first relay node includes the MT and the transparent forwarding unit. The first relay node has the transparent forwarding capability.

With reference to the first aspect, in some possible implementations, the first relay node includes a mobile termination MT and a distributed unit DU. The MT is configured to establish a third link. The third link is used to connect to a distributed unit of an upper-level device, and the third link is a control link. The DU is configured to establish a fourth link. The fourth link is used to provide access for a mobile termination MT of a lower-level device or the terminal device, and the fourth link is a control link or an access link.

It should be understood that the first relay node may include the MT and the DU. That is, the first relay node has a regenerative forwarding function.

With reference to the first aspect, in some possible implementations, the first relay node supports a regenerative forwarding mode at a radio link control RLC layer; or the first relay node supports a regenerative forwarding mode at a MAC layer.

According to a second aspect, a communication method is provided. The method may be performed by a second relay node. The second relay node herein may be the second relay node, or may be a processor, a module, a chip, a chip system, or the like that is in the second relay node and that implements the method. This is not limited in this application. The method includes the following steps.

The second relay node receives routing information and time-frequency resource information. The routing information is used by the second relay node to determine that the second relay node is a last relay node in transmission between a network device and a terminal device. The second relay node sends second information to the terminal device or the network device based on the time-frequency resource information. The second information includes information transmitted between the network device and the terminal device. The second relay node is a terrestrial relay node or a satellite relay node.

According to the method provided in this application, it is assumed that the second relay node serves as the last relay node in an uplink transmission direction or a downlink transmission direction, that is, the second relay node forwards received data to the terminal device or the network device. The second relay node sends the second information to the terminal device or the network device based on the received routing information and time-frequency resource information. The second information includes the information transmitted between the network device and the terminal device.

With reference to the second aspect, in some possible implementations, the routing information includes: identification information of a destination relay node and identification information of a forwarding path; identification information of the second relay node; satellite ephemeris information of the second relay node; position information of the second relay node; includes an end flag for stopping forwarding between relay nodes.

It should be understood that the identification information of the destination node in the routing information may be the identification information of the second relay node. The routing information received by the second relay node includes the identification information of the second relay node, or the position information of the second relay node, or the end flag for stopping forwarding between relay nodes. The second relay node determines that the second relay node is the last relay transmission node, and the second relay node sends, to the terminal device or the network device, the information transmitted between the terminal device and the network device.

With reference to the second aspect, in some possible implementations, the method further includes: The second relay node receives a forwarding direction. The forwarding direction includes an uplink forwarding direction or a downlink forwarding direction. That the second relay node sends the second information to the terminal device or the network device based on the time-frequency resource information includes: The second relay node sends the second information to the terminal device or the network device based on the time-frequency resource information and the forwarding direction.

With reference to the second aspect, in some possible implementations, the method further includes: The second relay node receives forwarding frequency information. The forwarding frequency information indicates information about a frequency used by the second relay node to forward the data transmission. That the second relay node sends the second information to the terminal device or the network device based on the time-frequency resource information includes: The second relay node sends the second information to the terminal device or the network device based on the time-frequency resource information and the forwarding frequency information.

With reference to the second aspect, in some possible implementations, the routing information includes routing information of a first relay node, and the method further includes: The second relay node sends the second information to the terminal device based on the routing information, a time-frequency resource, and a forwarding mode. The routing information further includes one or more of the following: a beam position index, position information of the terminal device, identification information of the terminal device, an index number of the terminal device, a beam index, a reference position, or angle information (for example, an elevation angle or an azimuth angle) of a beam.

With reference to the second aspect, in some possible implementations, the second relay node includes a mobile termination MT, a distributed unit DU, and a transparent forwarding unit. The MT is configured to establish a first link. The first link is used by the MT to connect to a distributed unit of an upper-level device, and the first link is a control link. The DU is configured to establish a second link. The second link is used to provide access for a mobile termination MT of a lower-level device, and the second link is a control link. The transparent forwarding unit is configured to provide a transparent forwarding function.

In a possible implementation, the second relay node includes the MT and the transparent forwarding unit. The second relay node has the transparent forwarding function.

With reference to the second aspect, in some possible implementations, the second relay node includes a mobile termination MT and a distributed unit DU. The MT is configured to establish a third link. The third link is used to connect to a distributed unit of an upper-level device, and the third link is a control link. The DU is configured to establish a fourth link. The fourth link is used to provide access for a mobile termination MT of a lower-level device or the terminal device, and the fourth link is a control link or an access link.

With reference to the second aspect, in some possible implementations, the second relay node supports a regenerative forwarding mode at a radio link control RLC layer; or the second relay node supports a regenerative forwarding mode at a MAC layer.

According to a third aspect, a communication apparatus is provided. The apparatus includes a transceiver unit and a processing unit. The transceiver unit is configured to receive routing information and time-frequency resource information. The routing information is used to determine a second relay node, and the time-frequency resource information indicates a time-frequency resource for data transmission between the first relay node and the second relay node.

The processing unit is configured to perform the data transmission with the second relay node based on the time-frequency resource information. The communication apparatus is a terrestrial relay node or a satellite relay node, and the second relay node is a terrestrial relay node or a satellite relay node.

With reference to the third aspect, in some possible implementations, the routing information includes: identification information of a destination relay node and identification information of a forwarding path; identification information of a forwarding path; identification information of the second relay node; satellite ephemeris information of the second relay node; position information of the second relay node; a forwarding port of the first relay node, where the forwarding port corresponds to the second relay node.

With reference to the third aspect, in some possible implementations, the processing unit is further configured to determine a forwarding mode based on first information. The forwarding mode includes a regenerative forwarding mode or a transparent forwarding mode. The processing unit is further configured to perform the data transmission with the second relay node based on the forwarding mode and the time-frequency resource information.

With reference to the third aspect, in some possible implementations, the first information includes the forwarding mode. The processing unit is further configured to determine the forwarding mode based on the first information; or the processing unit is further configured to determine the forwarding mode by performing blind detection and/or decoding on a time-frequency resource of second information. The second information is information for the data transmission.

With reference to the third aspect, in some possible implementations, the processing unit is further configured to perform the data transmission with the second relay node based on the time-frequency resource information and the transparent forwarding mode and/or the regenerative forwarding mode.

With reference to the third aspect, in some possible implementations, when the forwarding mode is the transparent forwarding mode, the processing unit is further configured to perform transmission of the second information with the second relay node based on the transparent forwarding mode and the time-frequency resource information. When the forwarding mode is the regenerative forwarding mode, the processing unit is further configured to perform transmission of third information with the second relay node based on the regenerative forwarding mode and the time-frequency resource information. The third information is determined based on the second information and the regenerative forwarding mode.

With reference to the third aspect, in some possible implementations, the transceiver unit is further configured to receive a forwarding direction. The forwarding direction includes an uplink forwarding direction or a downlink forwarding direction. The processing unit is further configured to perform the data transmission with the second relay node based on the time-frequency resource information and the forwarding direction.

With reference to the third aspect, in some possible implementations, the transceiver unit is further configured to receive forwarding frequency information. The forwarding frequency information indicates information about a frequency used by the first relay node to forward the data transmission. The processing unit is configured to perform the data transmission with the second relay node based on the time-frequency resource information and the forwarding frequency information.

With reference to the third aspect, in some possible implementations, the routing information includes routing information of the communication apparatus. The processing unit is further configured to perform the transmission of the second information based on the routing information, the time-frequency resource, and the forwarding mode. The second information is the information for the data transmission. The routing information further includes any one of the following: a beam position index, position information of a terminal device, identification information of the terminal device, an index number of the terminal device, a beam index, a reference position, or angle information (for example, an elevation angle or an azimuth angle) of a beam.

With reference to the third aspect, in some possible implementations, the communication apparatus further includes a mobile termination MT, a distributed unit DU, and a transparent forwarding unit. The MT is configured to establish a first link. The first link is used by the MT to connect to a DU of an upper-level device, and the first link is a control link. The DU is configured to establish a second link. The second link is used to provide access for an MT of a lower-level device, and the second link is a control link. The transparent forwarding unit is configured to provide a transparent forwarding function.

With reference to the third aspect, in some possible implementations, the communication apparatus further includes a mobile termination MT and a transparent forwarding unit.

With reference to the third aspect, in some possible implementations, the communication apparatus further includes a mobile termination MT and a distributed unit DU. The MT is configured to establish a third link. The third link is used to connect to a distributed unit of an upper-level device, and the third link is a control link. The DU is configured to establish a fourth link. The fourth link is used to provide access for a mobile termination MT of a lower-level device or the terminal device, and the fourth link is a control link or an access link.

With reference to the third aspect, in some possible implementations, the communication apparatus supports a regenerative forwarding mode at a radio link control RLC layer; or the communication apparatus supports a regenerative forwarding mode at a MAC layer.

According to a fourth aspect, a communication apparatus is provided. The apparatus includes a transceiver unit and a processing unit. The transceiver unit is configured to receive routing information and time-frequency resource information. The routing information is used to determine that the communication apparatus is a last relay node in transmission between a network device and a terminal device.

The processing unit is configured to send second information to the terminal device or the network device based on the time-frequency resource information. The second information includes information transmitted between the network device and the terminal device. The communication apparatus is a terrestrial relay node or a satellite relay node.

With reference to the fourth aspect, in some possible implementations, the routing information includes: identification information of a destination relay node and identification information of a forwarding path; identification information of a forwarding path; identification information of the second relay node; satellite ephemeris information of the second relay node; position information of the second relay node; a forwarding port of the first relay node, where the forwarding port corresponds to the second relay node.

With reference to the fourth aspect, in some possible implementations, the processing unit is further configured to determine a forwarding mode based on first information. The forwarding mode includes a regenerative forwarding mode or a transparent forwarding mode. The processing unit is further configured to perform the data transmission with the second relay node based on the forwarding mode and the time-frequency resource information.

With reference to the fourth aspect, in some possible implementations, the first information includes the forwarding mode. The processing unit is further configured to determine the forwarding mode based on the first information; or the processing unit is further configured to determine the forwarding mode by performing blind detection and/or decoding on a time-frequency resource of the second information. The second information is the information for the data transmission.

With reference to the fourth aspect, in some possible implementations, the processing unit is further configured to perform the data transmission with the second relay node based on the time-frequency resource information and the transparent forwarding mode and/or the regenerative forwarding mode.

A forwarding mode of the time-frequency resource of the second information includes the transparent forwarding mode and/or the regenerative forwarding mode.

With reference to the fourth aspect, in some possible implementations, when the forwarding mode is the transparent forwarding mode, the processing unit is further configured to perform transmission of the second information with the second relay node based on the transparent forwarding mode and the time-frequency resource information.

When the forwarding mode is the regenerative forwarding mode, the processing unit is further configured to perform transmission of third information with the second relay node based on the regenerative forwarding mode and the time-frequency resource information. The third information is determined based on the second information and the regenerative forwarding mode.

With reference to the fourth aspect, in some possible implementations, the transceiver unit is further configured to receive a forwarding direction. The forwarding direction includes an uplink forwarding direction or a downlink forwarding direction. The processing unit is further configured to send the second information to the terminal device or the network device based on the time-frequency resource information and the forwarding direction.

With reference to the fourth aspect, in some possible implementations, the transceiver unit is further configured to receive forwarding frequency information. The forwarding frequency information indicates information about a frequency used by the first relay node to forward the data transmission. The processing unit is further configured to send the second information to the terminal device or the network device based on the time-frequency resource information and the forwarding frequency information.

With reference to the fourth aspect, in some possible implementations, the routing information includes routing information of the communication apparatus. The processing unit is further configured to perform the transmission of the second information based on the routing information, the time-frequency resource, and the forwarding mode. The second information is the information for the data transmission. The routing information further includes any one of the following: a beam position index, position information of the terminal device, identification information of the terminal device, an index number of the terminal device, a beam index, a reference position, or angle information (for example, an elevation angle or an azimuth angle) of a beam.

With reference to the fourth aspect, in some possible implementations, the communication apparatus further includes a mobile termination MT, a distributed unit DU, and a transparent forwarding unit. The MT is configured to establish a first link. The first link is used by the MT to connect to a DU of an upper-level device, and the first link is a control link. The DU is configured to establish a second link. The second link is used to provide access for an MT of a lower-level device, and the second link is a control link. The transparent forwarding unit is configured to provide a transparent forwarding function.

With reference to the fourth aspect, in some possible implementations, the communication apparatus further includes a mobile termination MT and a transparent forwarding unit.

With reference to the fourth aspect, in some possible implementations, the communication apparatus further includes a mobile termination MT and a distributed unit DU. The MT is configured to establish a third link. The third link is used to connect to a distributed unit of an upper-level device, and the third link is a control link. The DU is configured to establish a fourth link. The fourth link is used to provide access for a mobile termination MT of a lower-level device or the terminal device, and the fourth link is a control link or an access link.

With reference to the fourth aspect, in some possible implementations, the communication apparatus supports a regenerative forwarding mode at a radio link control RLC layer; or the communication apparatus supports a regenerative forwarding mode at a MAC layer.

According to a fifth aspect, this application provides a communication apparatus. The communication apparatus includes a processor, configured to implement the method according to any one of the first aspect and the second aspect or the implementations of the first aspect and the second aspect. The processor is coupled to a memory. The memory is configured to store instructions and data. When the processor executes the instructions stored in the memory, the method according to any one of the first aspect and the second aspect or the implementations of the first aspect and the second aspect can be implemented.

Optionally, the communication apparatus may further include the memory. Optionally, the memory may be coupled to the processor. Optionally, the communication apparatus may further include a communication interface. The communication interface is used by the apparatus to communicate with another device. For example, the communication interface may be a transceiver, a hardware circuit, a bus, a module, a pin, or a communication interface of another type.

According to a sixth aspect, this application provides a communication system, including at least one of a first relay node, a second relay node, a terminal device, and a network device. The first relay node is configured to perform any method shown in the first aspect, and the second relay node is configured to perform any method shown in the second aspect.

According to a seventh aspect, this application further provides a computer program. When the computer program is run on a computer, the computer is caused to perform the method according to any one of the first aspect and the second aspect or the implementations of the first aspect and the second aspect.

According to an eighth aspect, this application further provides a computer program product, including instructions. When the instructions are run on a computer, the computer is caused to perform the method according to any one of the first aspect and the second aspect or the implementations of the first aspect and the second aspect.

According to a ninth aspect, this application further provides a computer-readable storage medium. The computer-readable storage medium stores a computer program or instructions. When the computer program or the instructions are run on a computer, the computer is caused to perform the method according to any one of the first aspect and the second aspect or the implementations of the first aspect and the second aspect.

According to a tenth aspect, this application further provides a chip. The chip is configured to read a computer program stored in a memory, to perform the method according to any one of the first aspect and the second aspect or the implementations of the first aspect and the second aspect; or the chip is configured to perform the method according to any one of the first aspect and the second aspect or the implementations of the first aspect and the second aspect.

According to an eleventh aspect, this application further provides a chip system. The chip system includes a processor, configured to support an apparatus in implementing the method according to any one of the first aspect and the second aspect or the implementations of the first aspect and the second aspect.

In a possible design, the chip system further includes a memory, and the memory is configured to store a program and data that are necessary for the apparatus. The chip system may include a chip, or may include a chip and another discrete component.

### BRIEF DESCRIPTION OF DRAWINGS

FIG. 1 is a diagram of a satellite communication scenario according to an embodiment of this application;
FIG. 2 is a diagram of an ATG communication scenario;
FIG. 3 is a diagram of another communication scenario according to an embodiment of this application;
FIG. 4 is a diagram of another communication scenario according to an embodiment of this application;
FIG. 5(1) to FIG. 5(3) are diagrams of network architectures according to an embodiment of this application;
FIG. 6(1) to FIG. 6(4) are diagrams of other network architectures according to an embodiment of this application;
FIG. 7 is a diagram of another communication scenario according to an embodiment of this application;
FIG. 8(1) to FIG. 8(4) are diagrams of other network architectures according to an embodiment of this application;
FIG. 9(1) to FIG. 9(4) are diagrams of other network architectures according to an embodiment of this application;
FIG. 10(1) and FIG. 10(2) are diagrams of other network architectures according to an embodiment of this application;
FIG. 11 is a diagram of another network procedure according to an embodiment of this application;
FIG. 12 is a diagram of an IAB network;
FIG. 13 is a diagram of an IAB user plane protocol stack;
FIG. 14 is a schematic flowchart of a communication method according to an embodiment of this application;
FIG. 15 is a diagram of a network architecture according to an embodiment of this application;
FIG. 16 is a diagram of an elevation angle and an azimuth angle of a beam;
FIG. 17(1) and FIG. 17(2) are diagrams of manners for indicating data forwarding according to an embodiment of this application;
FIG. 18 is a diagram of another network architecture according to an embodiment of this application;
FIG. 19 is a diagram of a user plane protocol stack according to an embodiment of this application;
FIG. 20 is a diagram of another user plane protocol stack according to an embodiment of this application;
FIG. 21 is a diagram of a control plane protocol stack according to an embodiment of this application;
FIG. 22 is a diagram of another control plane protocol stack according to an embodiment of this application;
FIG. 23 is a diagram of another user plane protocol stack according to an embodiment of this application;
FIG. 24 is a diagram of another user plane protocol stack according to an embodiment of this application;
FIG. 25 is a diagram of another user plane protocol stack according to an embodiment of this application;
FIG. 26 is a diagram of another network architecture according to an embodiment of this application;
FIG. 27 is a diagram of another user plane protocol stack according to an embodiment of this application;
FIG. 28 is a diagram of a structure of a communication apparatus 2800 according to an embodiment of this application; and
FIG. 29 is a diagram of a structure of a communication apparatus 2900 according to an embodiment of this application.

### DESCRIPTION OF EMBODIMENTS

The following describes technical solutions of this application with reference to accompanying drawings.

The technical solutions of this application may be applied to a non-terrestrial network (non-terrestrial network, NTN) system like a satellite communication system, a high-altitude platform (high-altitude platform station, HAPS) communication system, or an uncrewed aerial vehicle, for example, an integrated communication and navigation (integrated communication and navigation, ICAN) system, a global navigation satellite system (global navigation satellite system, GNSS), and an ultra-dense low-orbit satellite communication system.

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system.

The satellite communication system includes a user equipment (user equipment, UE) and a network device. The user equipment may also be referred to as a user terminal, a terminal device, a mobile station, or the like. The network device may include one or more satellites and one or more terrestrial station devices. The terrestrial station device may also be referred to as a core network device. The satellite may be a low earth orbit (low earth orbit, LEO) satellite, a non-geostationary earth orbit (non-geostationary earth orbit, NGEO) satellite, or the like. The satellite may provide a communication service, a navigation service, a positioning service, and the like for the terminal device through a plurality of beams. The satellite uses a plurality of beams to cover a service area, and different beams may be used for communication in one or more manners of time division, frequency division, and space division. The satellite performs wireless communication with the terminal device by broadcasting a communication signal, a navigation signal, and the like. The satellite may perform wireless communication with the terrestrial station device. The satellite mentioned in embodiments of this application may be a satellite base station, or may include an orbit receiver or a repeater configured to relay information, or may be a network side device mounted on the satellite.

The terminal device mentioned in embodiments of this application includes various handheld devices having a wireless communication function, a vehicle-mounted device, a wearable device, a computing device, or another processing device connected to a wireless modem, and may be specifically a user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

The terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears data services, and the like. The CN may further include network elements such as an access and mobility management function (access and mobility management function, AMF) network element, a session management function (session management function, SMF) network element, an authentication server function (authentication server function, AUSF) network element, a policy control function (policy control function, PCF) node, and a user plane function (user plane function, UPF) network element. The AMF network element is configured to manage access and mobility of the UE, and is mainly responsible for functions such as UE authentication, UE mobility management, and UE paging.

The network device may further include but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB, a TRP, or a TP in a 5G system, or one antenna panel or one group of antenna panels (including a plurality of antenna panels) of a base station in a 5G system. In addition, the network device may alternatively be a network node that forms the gNB or the TP, for example, a BBU, a distributed unit (distributed unit, DU), or the like. Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system.

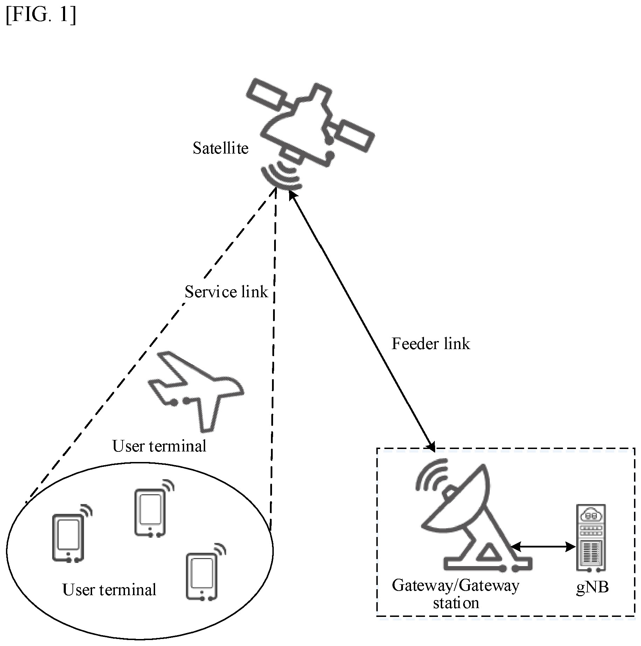

FIG. 1 is a diagram of a satellite communication scenario applicable to an embodiment of this application. As shown in FIG. 1, network devices in this scenario include a satellite device and a gateway/gateway station (gateway, GW). User terminals include an internet of things terminal, or may be terminals with different forms and performance, for example, a mobile phone terminal or a high-altitude aircraft, which is not limited in this application. A link between the satellite and the user terminal is referred to as a service link (service link), and a link between the satellite and the gateway is referred to as a feeder link (feeder link).

The method provided in embodiments of this application may also be applied to multi-satellite communication scenarios extended from the communication scenario shown in FIG. 1. Details are not listed one by one in this application.

It should be understood that operating modes of the satellite device may be classified into a transparent transmission (transparent) mode (or referred to as a transparent forwarding mode/manner, or transparent transmission for short) and a regenerative (regenerative) mode (or referred to as a digital forwarding mode/manner).

It should be understood that, when the operating mode of the device is the transparent transmission mode, the device may be considered as an amplify-and-forward (amplify-and-forward, AF) relay device/node, and the amplify-and-forward relay node may be configured to directly forward a received signal to a destination node without decoding or encoding it. The method is simple and can reduce the relay burden. However, while directly forwarding the received signal to the destination node, the relay node also forwards noise to the destination node.

It should be understood that, when the operating mode of the device is the regenerative forwarding mode, the device may be considered as a decode-and-forward (decode-and-forward, DF) relay device/node, and the decode-and-forward relay node may be configured to decode a received signal, re-encode the decoding result, and finally forward the re-encoded signal to the destination node. This method can prevent excessive noise at the destination node that would result from forwarding noise. However, the regenerative forwarding protocol is complex, and the relay node has a high computational burden.

When the satellite operates in the transparent transmission mode, it functions as a transparent forwarding relay. The gateway has part or all of functions of a base station and may be considered as a base station. Alternatively, if the base station and the gateway are separately deployed, the delay of the feeder link is the sum of the delay from the satellite to the gateway and the delay from the gateway to the gNB. In this embodiment of this application, the transparent transmission mode is described by using an example case in which the gateway and the gNB are co-located or are close to each other. If the gateway is far away from the gNB, the delay of the feeder link is the sum of the delay from the satellite to the gateway and the delay from the gateway to the gNB.

When the satellite operates in the regenerative mode, it has a data processing capability and part or all of functions of a base station. In this case, the satellite may be considered as a base station. The gNB is also connected to a core network. Similarly, a regenerative forwarding node may also have functions of a base station (or part of the functions of the base station), and the regenerative forwarding node may be considered as a base station.

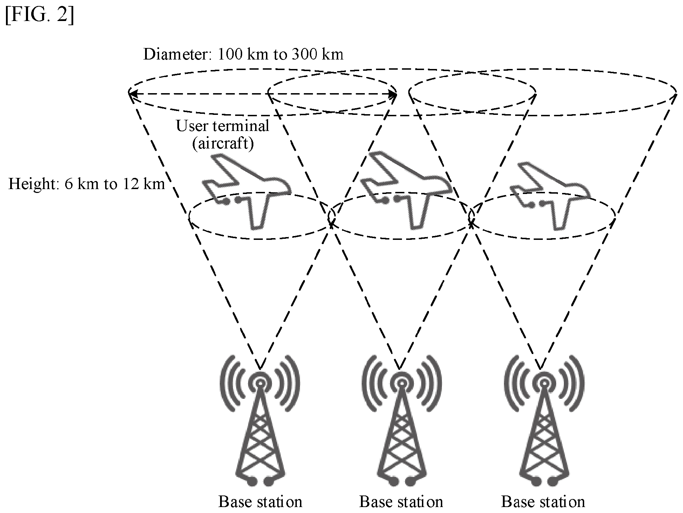

It should also be understood that this application is further applicable to an air-to-ground (air-to-ground, ATG) communication scenario shown in FIG. 2, where a network device includes a terrestrial base station, and a user terminal includes a high-altitude aircraft, an on-board handheld terminal, and the like.

This application proposes using a terrestrial relay device and a satellite-to-ground forwarding link that can be deployed on demand to replace or supplement existing inter-satellite links (ISL, inter-satellite link), thereby reducing satellite payload costs and improving the cost-effectiveness of low-orbit satellite network deployment.

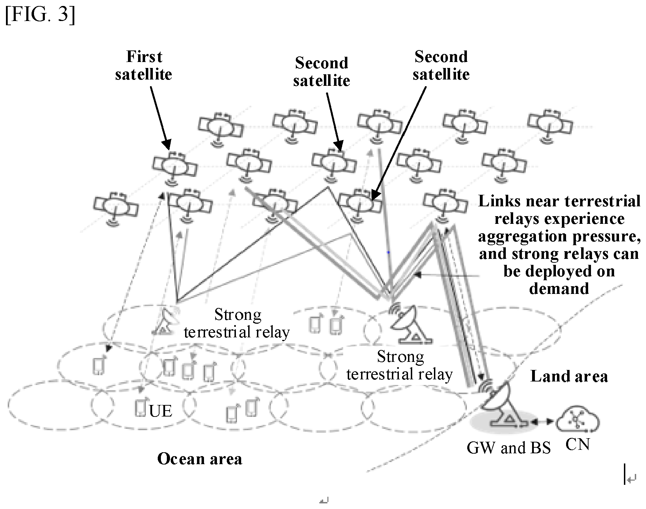

FIG. 3 is a diagram of another communication scenario according to an embodiment of this application. After information of a user terminal (a UE for short) arrives at a satellite serving the UE, the information is transmitted to a satellite near a target node via terrestrial relay devices and satellite-to-ground links in a multi-hop manner, then the information is transmitted to the target node by connecting a gateway station near the target node to the target node, and vice versa. The terrestrial relay forwards a signal of one satellite (for example, a first satellite) to one or more satellites (for example, a second satellite), and uses "UE-satellite-terrestrial relay device-satellite-terrestrial relay device-...-satellite-GW-target node" to replace conventional signal transmission of "UE-satellite-satellite-...-satellite-GW-target node".

It should be understood that a deployment mode shown in FIG. 3 has the following advantages:
1. A specification of the terrestrial device is easily improved compared with that of an on-satellite device. For example, a receive gain or transmit power of the terrestrial relay device may be increased, to increase a signal-to-noise ratio of the satellite-to-ground link without changing a communication payload of the satellite. The specifications of the terrestrial relay devices around the GW can be designed based on an aggregation capacity. The terrestrial relay devices can be deployed and upgraded on demand to avoid capacity wastes and shorten an upgrade periodicity.
2. Costs of the terrestrial device are easier to control than those of the on-satellite device. Therefore, the terrestrial relay devices on the satellite-to-ground link can be designed asymmetrically (terrestrial devices having strong capabilities and a satellite having weak capabilities), to reduce a requirement on a communication payload capability of the satellite.
3. The terrestrial relay device on the satellite-to-ground link can implement only a function of forwarding a signal between satellites, and does not need to be directly connected to a core network or an internet (no optical fiber or microwave backhaul is needed). A deployment position of the terrestrial relay device is less limited than that of a conventional GW.

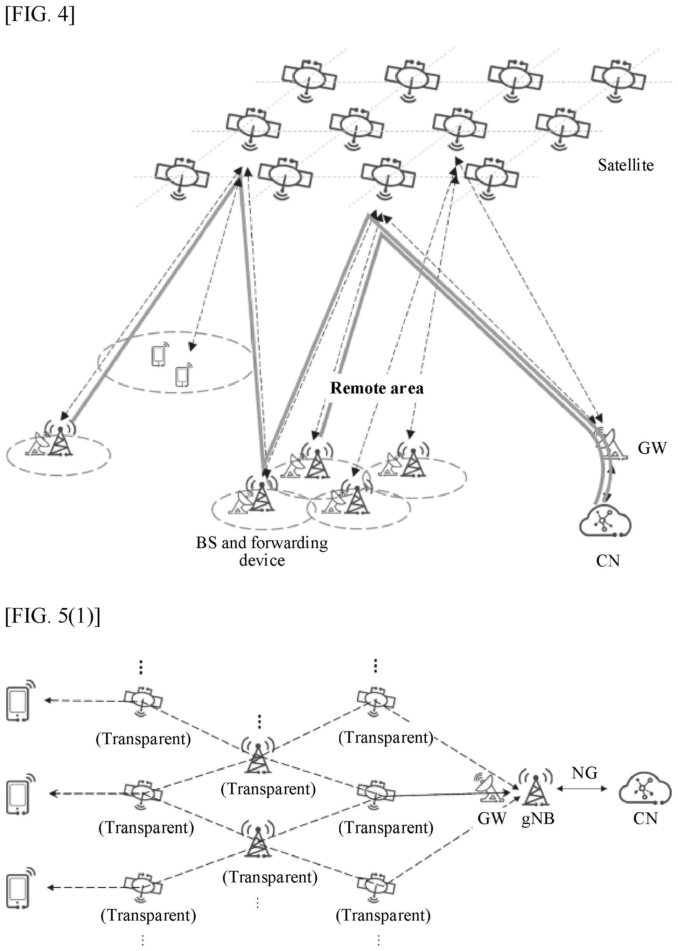

It should be further understood that this application is applicable to scenarios in which a capacity of an ISL in a hotspot area in a future high-throughput satellite network is limited, and it is difficult to deploy terrestrial devices connected to a network in a no man's land. For example, the technical solution in this application may be further applicable to the following several potential application scenarios:
Scenario 1: An existing base station serves as a relay for inter-satellite forwarding. As shown in FIG. 4, a transceiver device that supports forwarding of a satellite signal is deployed for an existing base station, to forward a signal of a satellite to another satellite. This scenario is applicable to a scenario in which a terrestrial BS has been deployed. A terrestrial relay device may serve as a relay for inter-satellite data transmission, and may also serve as a BS to serve a surrounding UE.
Scenario 2: A terrestrial relay device used only for inter-satellite signal transmission is applicable to a scenario in which the terrestrial relay device is deployed in an area without users, for example, a no man's land or an ocean, as shown in FIG. 3.

It should be understood that operating modes of the terrestrial relay device and the satellite may be classified into a transparent transmission mode and a regenerative mode. When operating in the transparent transmission mode, the device has functions of radio frequency signal amplification and forwarding and frequency shift. When operating in the regenerative mode, the device has a data processing capability (functions such as encoding and decoding, reassembly, and retransmission), and has functions of the base station or a part of the functions of the base station (for example, an IAB node, a gNB-DU, or a UE-relay).

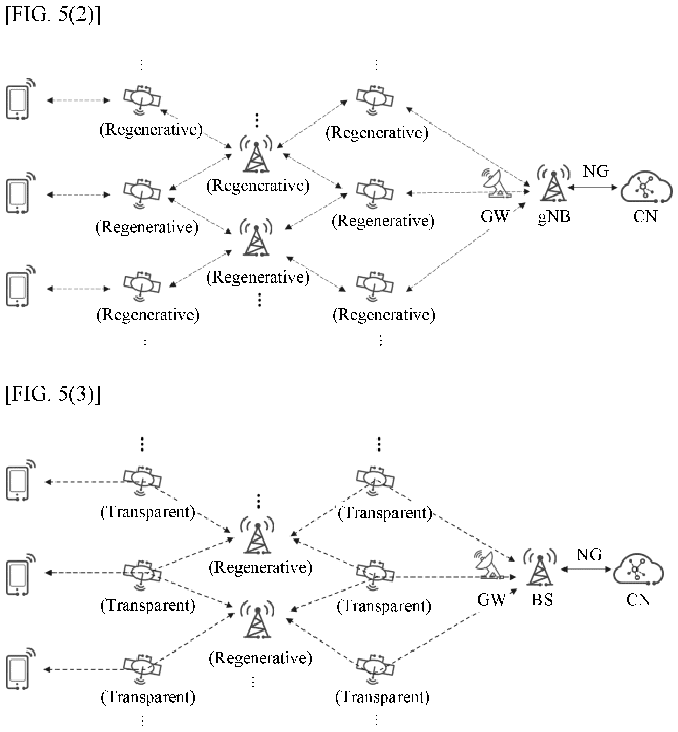

It should also be understood that, based on the processing capabilities of satellites and terrestrial relay devices, the technical solutions provided in this application may be further applicable to the following network architectures:
Architecture 1: full transparent transmission architecture. Both satellite and terrestrial relay devices are transparent transmission devices. That is, each has transparent transmission capabilities. They do not perform processing such as encoding and decoding, reassembly, or retransmission on transmitted data. The BS node sensed by the UE is a terrestrial BS, as shown in FIG. 5(1).
Architecture 2: full regenerative architecture. Both satellites and terrestrial relay devices are regenerative devices. That is, each has regenerative capabilities. Both can perform processing such as encoding and decoding, reassembly, and retransmission on transmitted data. The node sensed by the UE is the satellite serving the UE, as shown in FIG. 5(2).
Architecture 3: partial regenerative and partial transparent transmission architecture. Some satellites and terrestrial relay devices are transparent transmission nodes, whereas others are regenerative nodes. Generally, satellites serve as transparent transmission nodes, and terrestrial relay devices serve as regenerative nodes, thereby minimizing payload costs for similar communication performance. The node sensed by the UE is the BS node closest to the UE on a multi-hop link, as shown in FIG. 5(3).

The foregoing describes, based on FIG. 1 to FIG. 5(3) and by using examples, the communication scenarios and the architectures to which the method provided in this application is applicable. With reference to the scenarios and the architectures shown in FIG. 1 to FIG. 5(3), the following describes a basic function and a potential network form of a terrestrial relay device using specific scenario examples.

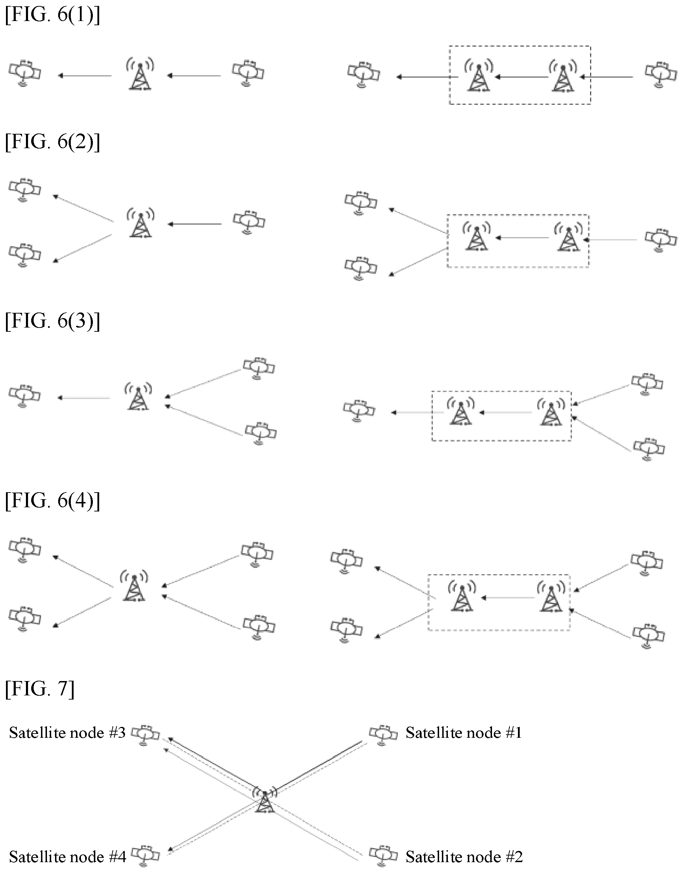

Scenario 1: A terrestrial relay device (or referred to as a terrestrial forwarding device) may forward a signal from one satellite to one or more satellites. Further, based on a quantity of satellites and a quantity of satellite signals received and forwarded by the satellite and the terrestrial relay device, the following four potential forms may be obtained through classification:
Form 1: As shown in FIG. 6(1), a terrestrial relay device may forward one satellite signal to another satellite.
Form 2: As shown in FIG. 6(2), a terrestrial relay device may forward one satellite signal to a plurality of satellites.
Form 3: As shown in FIG. 6(3), a terrestrial relay device may forward a plurality of satellite signals to one satellite.
Form 4: As shown in FIG. 6(4), a terrestrial relay device may forward a plurality of satellite signals to a plurality of satellites.

Based on FIG. 6(1) to FIG. 6(4), a terrestrial relay device may be implemented as one terrestrial device or a device group including a plurality of terrestrial relay devices to forward satellite signals. Similarly, a satellite may be one device or a device group including a plurality of satellite devices.

It should be understood that the terrestrial relay device may operate in the transparent transmission mode, performing only frequency conversion and radio frequency amplification on transmission signals; or in the regenerative mode, performing decoding, reassembly, and encoding on transmitted data signals, as well as necessary adjustments to part of control information.

It should also be understood that, in this application, a terrestrial relay device operating in the regenerative mode may independently perform decoding, reassembly, and encoding on signals from a plurality of satellite nodes before forwarding; or perform joint decoding, cross-node reassembly, and encoding on signals from the plurality of satellite nodes before forwarding. The terrestrial relay device may perform transparent transmission forwarding on data received from some satellite nodes and perform regenerative forwarding on data from remaining satellites, thereby providing a low-cost alternative to and capacity expansion for the inter-satellite link.

Scenario 2: In this scenario, a potential feature of configuration information of a terrestrial relay device is mainly described. The terrestrial relay device needs to pre-store or receive a time-varying configuration table, perform frequency shift and/or combination on one or more received signals for forwarding to one or more other satellites. Because a satellite constellation has a dynamic topology, satellite nodes connected to the terrestrial relay device at different time, frequencies used for receiving and forwarding, and routing rules for forwarding are time-varying. Potential information included in the configuration table is shown in Table 1.

**Table 1 Forwarding configuration table that takes effect on time**

| Node | Incident satellite list (frequency) | Forwarding satellite list (frequency) | Routing configuration table | Effective time |
|---|---|---|---|---|
| Terrestrial relay node #1 | Satellite #1 (fa and fb) | Satellite #3 (fa) | Configuration table #1-1 | Time segment #1-1 |
| | Satellite #2 (fa and fc) | Satellite #4 (fa and fc) | | |
| | ... | ... | | |
| | Satellite #5 (fa and fb) | Satellite #7 (fa) | Configuration table #1-2 | Time segment #1-2 |
| | Satellite #6 (fa and fc) | Satellite #8 (fa and fc) | | |
| | ... | ... | | |
| | Satellite #9 (fa and fb) | Satellite #11 (fa) | Configuration table #1-3 | Time segment #1-3 |
| | Satellite #10 (fa and fc) | Satellite #12 (fa and fc) | | |
| | ... | ... | | |
| Terrestrial relay node #2 | Satellite #13 (fa and fb) | Satellite #15 (fa) | Configuration table #2-1 | Time segment #2-1 |
| | | Satellite #16 (fa and fc) | | |
| | Satellite #14 (fa and fc) | | | |
| | ... | ... | | |
| | Satellite #17 (fa and fb) | Satellite #19 (fa) | Configuration table #2-2 | Time segment #2-2 |
| | | Satellite #20 (fa and fc) | | |
| | Satellite #18 (fa and fc) | | | |
| | ... | ... | | |
| | Satellite #21 (fa and fb) | Satellite #23 (fa) | Configuration table #2-3 | Time segment #2-3 |
| | | Satellite #24 (fa and fc) | | |
| | Satellite #22 (fa and fc) | | | |
| | ... | ... | | |
| ... | ... | ... | ... | ... |

As shown in FIG. 7, a terrestrial transparent transmission relay device that is connected to four satellites is used as an example. The relay node may exchange signals of the four satellites. Based on a configuration or a pre-agreement, the terrestrial relay device forwards a signal of a satellite node #1 to a satellite node #3 and a satellite node #4, and forwards a signal of a satellite node #2 to the satellite node #3 at the same time. Because information from the relay node to the satellite node #3 includes information from the satellite node #1 and information from the satellite node #2, a bandwidth of the link needs to be higher, and a frequency shift operation needs to be performed on a frequency of the satellite node #1 or the satellite node #2.

A link between the terrestrial relay device and the satellite may use an extremely narrow beam. Therefore, intra-frequency reuse may be used for input and output beams as much as possible to improve utilization. In scenarios in which a beam width is large or a distance between satellite nodes is short, an inter-frequency forwarding mode may alternatively be used frequently.

The terrestrial relay device may select a frequency of a forwarded signal, to perform adaptive adjustment. A series of candidate frequencies (and bandwidths) are pre-configured for the terrestrial relay device. Due to weather, signal attenuation of a millimeter wave frequency is excessively large, and the terrestrial relay device may select, from the candidate frequencies, a frequency that is less sensitive to rainwater for communication, to ensure stability of a communication link.

Scenario 3: In this scenario, examples are used to describe terrestrial relay devices in different operating modes and different network forms corresponding to different types of incident and forwarded signals.

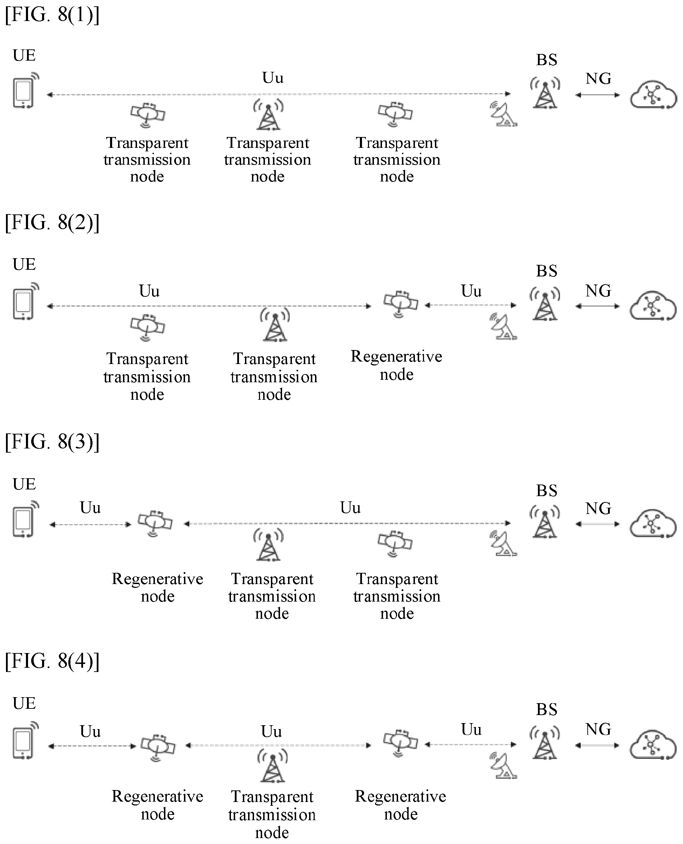

For a transparent transmission node, the terrestrial relay device may be a conventional application function (application function, AF), a network-controlled repeater (network-controlled repeater, NCR) device, or the like. FIG. 8(1) to FIG. 8(4) show examples of four forms in which a terrestrial transparent transmission relay device receives and transmits signals.

As shown in FIG. 8(1), the terrestrial transparent terrestrial relay device forwards a signal of a previous terrestrial transparent transmission node to another transparent transmission node; as shown in FIG. 8(2), the terrestrial transparent terrestrial relay device forwards a signal of a previous regenerative node to a transparent transmission node; as shown in FIG. 8(3), the terrestrial transparent terrestrial relay device forwards a signal of a previous transparent transmission node to a regenerative node; and as shown in FIG. 8(4), the terrestrial transparent terrestrial relay device forwards a signal of a previous regenerative node to a regenerative node.

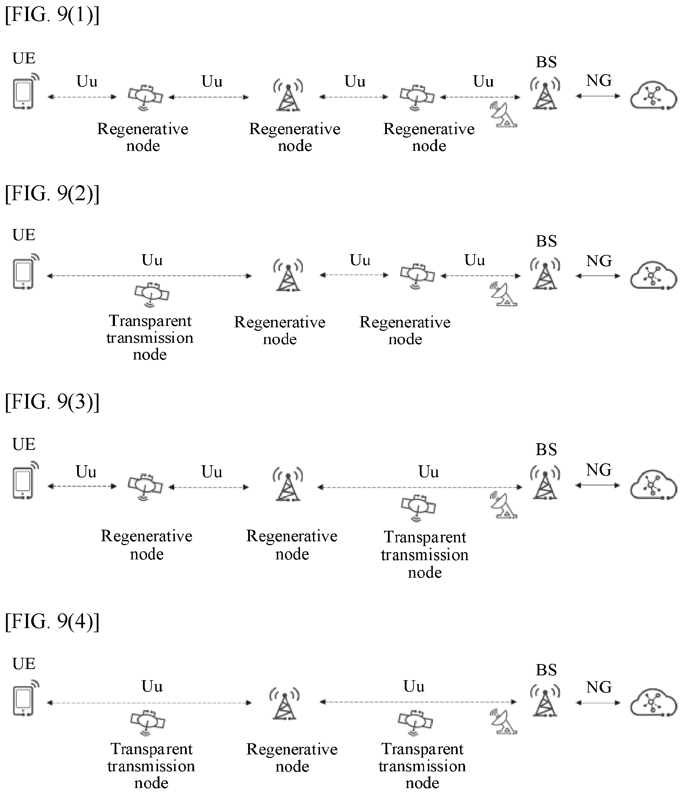

For the regenerative node, the terrestrial relay device may be a conventional base station, a conventional gNB-DU, an IAB node, a UE-relay, or the like. FIG. 9(1) to FIG. 9(4) show examples of four forms in which a regenerative terrestrial transmission relay receives and transmits signals.

As shown in FIG. 9(1), the regenerative terrestrial relay device forwards a signal of a previous regenerative node to another regenerative node; as shown in FIG. 9(2), the regenerative terrestrial relay device forwards a signal of a previous regenerative node to a transparent transmission node; as shown in FIG. 9(3), the regenerative terrestrial relay device forwards a signal of a previous transparent transmission node to a regenerative node; and as shown in FIG. 9(4), the regenerative terrestrial relay device forwards a signal of a previous transparent transmission node to a transparent transmission node.

Scenario 4: In this scenario, a manner in which a terrestrial relay device receives operations and maintenance instructions is described by using an example. The operations and maintenance instructions are sent, in an in-band manner, from a previous regenerative node or from an upper-level transparent transmission node. A terrestrial transparent transmission relay may be bound with a mobile termination (MT) to receive the operations and maintenance instructions; and a regenerative terrestrial relay may serve as an MT node to obtain the operations and maintenance instructions. The operations and maintenance instructions include information such as a route configuration of the node, and frequencies, bandwidths, beam widths, directions, scanning patterns, and effective time that are of transmit and receive beams.

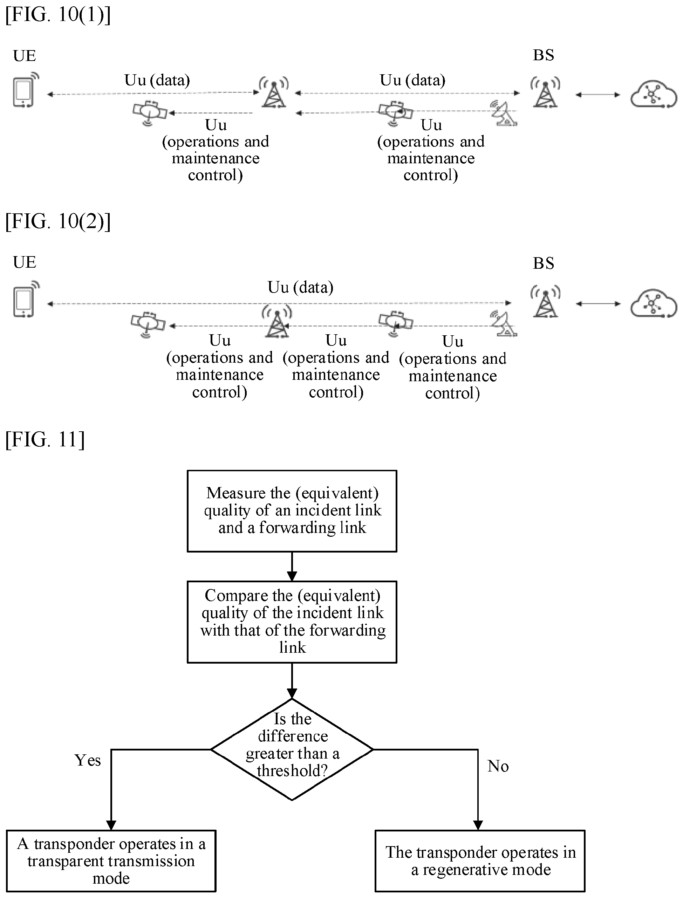

As shown in FIG. 10(1), a regenerative terrestrial relay device obtains operations and maintenance instructions. As shown in FIG. 10(2), a terrestrial transparent transmission relay device obtains operations and maintenance instructions through binding with an MT.

It should be understood that the terrestrial relay device receives, in the in-band manner, the operations and maintenance instructions, so that an in-band bandwidth is large, a capacity is high, and operations and maintenance information can be quickly transferred.

Scenario 5: In this scenario, an operating mode of a terrestrial relay device is described by using an example. A terrestrial relay device having a regenerative capability can be degraded to a transparent transmission mode. That is, a received signal is not decoded, and is forwarded at a same frequency or in a frequency shift manner. The terrestrial relay device monitors quality of a signal receiving link and a forwarding link, and determines, based on the quality of the receiving link and the quality of the forwarding link, whether the terrestrial relay device operates in a regenerative mode or the transparent transmission mode.

As shown in FIG. 11, if a difference between quality of a forwarding link and a signal-to-noise ratio (signal-noise ratio, SNR) of a receiving link exceeds a threshold, a terrestrial relay device forwards data in a transparent transmission mode. In this case, a comprehensive capacity of the two links of the terrestrial relay device is not lost due to noise amplification in a forwarding process. The transparent transmission mode can reduce power consumption of the terrestrial relay device. This is especially important for a terrestrial forwarding device that depends on solar energy and diesel power supply. If the difference between the quality of the forwarding link and the SNR of the receiving link is less than the threshold, the comprehensive capacity of the two links of the terrestrial relay device is lost due to a transparent forwarding process. Therefore, the terrestrial relay device needs to select a regenerative mode to forward data, and reconstruct the data to avoid a capacity loss.

Optionally, a base station configures the threshold for the relay device, or the threshold is pre-configured/predefined via a system. A value of the threshold is not limited in this application.

The quality of the forwarding link and the SNR of the receiving link may refer to quality of a link from the terrestrial relay device to a nearest-hop node, or may refer to quality of an equivalent link from the terrestrial relay device to a nearest-hop regenerative node.

Optionally, if both the quality of the forwarding link and the SNR or an equivalent SNR of the receiving link are higher than a threshold (the comprehensive capacity of the two links is large enough), even if the difference between the SNRs of the two links is less than the threshold, the terrestrial relay device may operate in the transparent transmission mode.

It should be understood that, in the foregoing scenario 5, the operating mode of the terrestrial relay device is adaptively adjusted based on channel quality, so that power consumption can be reduced.

Currently, a 5G NR technology is evolving from R18 to R19. In addition, the NR technology has entered a commercial deployment phase from a standardization phase. An NR standard protocol is studied to design a wireless communication technology for terrestrial cellular network scenarios, and can provide users with wireless communication services featuring ultra-low delay, ultra-high reliability, ultra-high rates, and ultra-massive connectivity. However, cellular networks cannot achieve seamless global coverage. For example, in areas without terrestrial base stations, such as sea areas, polar areas, and rainforests, the cellular network cannot provide voice and data services for these areas without cellular network coverage.

In comparison with terrestrial communication, non-terrestrial network (non-terrestrial network, NTN) communication has features such as a large coverage area and flexible networking, and can achieve seamless global network coverage. An NTN network is not only a supplement to a current terrestrial network, but also can be considered as an independent communication system that provides the users with global high-speed network access. Currently, research institutes, communication organizations, and communication companies all over the world participate in researching NTN communication technologies and formulating standards, aiming to build a unified communication network for space-air-ground communication. Currently, the 3GPP is studying and formulating an NR-NTN standard, to apply an NR standard to communication scenarios such as a satellite and a high-altitude platform.

An integrated access and backhaul (integrated access and backhaul, IAB) network technology exists. The IAB supports wireless backhaul and relay links, and can implement flexible and very dense deployment of NR cells, without proportionally increasing density of wired transmission networks. Main application scenarios of the IAB technology include: high-cost optical fiber deployment, site densification, street coverage extension and coverage hole compensation, indoor coverage extension and coverage hole compensation, and the like.

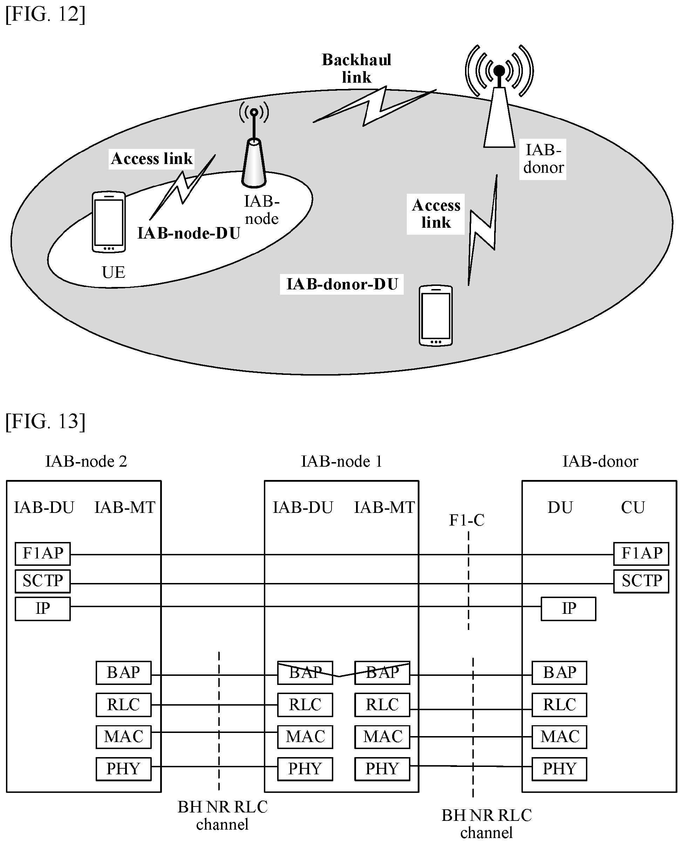

FIG. 12 is a diagram of an IAB network. A forwarding-based IAB architecture includes two types of network element nodes: an IAB-node and an IAB-donor. The IAB-node supports NR access and backhaul functions, and includes an IAB-node-MT (also referred to as an IAB-MT) and an IAB-node-DU (also referred to as an IAB-DU). The IAB-node-mobile termination (mobile termination, MT) is connected to a DU or an IAB-donor-DU of a parent node as a common UE to implement a wireless transmission backhaul link. The IAB-node-DU is a pole site cell on an access side of the IAB-node, provides coverage hole compensation, and provides access for a common UE or a lower-level IAB-node-MT.

The IAB-donor is a gNodeB (also referred to as a gNodeB-donor) that supports an IAB additional function, and is connected to a core network by using non-IAB, for example, an optical fiber. The IAB-donor-CU provides connections for the IAB-donor-DU and the IAB-node-DU. The IAB-donor-DU provides access for the UE or the IAB-MT. An F1 interface is used for connection between the IAB-node-DU and the IAB-donor-CU, and is completely inherited from an F1 interface between a DU and a CU. A Uu interface is used for connection between the DU of the parent node and the IAB-node-MT.

In a satellite-to-ground forwarding network, if an IAB node is used, a BAP layer is responsible for forwarding a data packet between an IAB-donor-DU and an access IAB-node, to implement a routing function, as shown in FIG. 13. The BAP layer provides a routing function in a multi-hop scenario. The BAP routing function implements data transmission from a transmit end to a receive end through a specified route. A BAP packet header (including a destination BAP address and a BAP path ID) is added to upper-layer data at the transmit end, and the BAP packet header is removed at the receive end before the data is forward to an upper layer.

It should be understood that for the BAP layer routing function, the receive end needs to perform a decoding operation on the data, to obtain the BAP header. That is, the BAP layer routing function is not applicable to a transparent transmission node (the transparent transmission node does not decode data to be sent to a terminal/base station, but performs transparent data transmission. Therefore, the transparent transmission node cannot obtain the destination address and the path ID at the BAP layer), and a routing manner compatible with the transparent transmission node and a regenerative node needs to be designed, and a function of the regenerative node needs to be simplified.

Based on the foregoing IAB technology, a network device NCR is similar to the IAB node. The NCR may serve as an apparatus for amplifying and forwarding a signal of a base station (a parent node) accessed by a UE. Compared with the IAB node, the NCR has simpler functions and lower costs. The NCR may be considered as a transparent transmission node.

An NCR-MT is connected to a gNB through a Uu interface, and a control link (control link, C-link) is used to control the NCR. The NCR may receive control information (namely, side information) of the base station via the control link (the Uu interface), backhaul link control signaling, backhaul/control link beam direction signaling, NCR enabling/disabling signaling, and power control signaling. The NCR forwards data between the gNB and the UE. An NCR vendor may provide feature descriptions of an access link (access link) beam, for example, a direction, a width, coverage, and the like of the beam. A maximum quantity of beam indications supported by the access link beam is 64. The base station accessed by the NCR can only indicate a beam index number (beam index) to the NCR, and the NCR controls, based on the beam index number, a beam direction, a width, and the like of a signal forwarded via the access link. The NCR performs transparent transmission forwarding on an uplink signal or a downlink signal between the gNB and the UE via the backhaul link (backhaul link) and the access link.

It should be understood that an NCR node is used in a satellite scenario, that is, a satellite NCR is used as an example. Because the NCR supports only 64 predefined beam indications, to meet omnidirectional coverage, each of 64 beams is a wide beam. This causes a low signal-to-noise ratio of an access link. The NCR can transmit only one access link beam at a same moment. When the NCR needs to forward data in two different directions at the same time, the NCR cannot send the data in the two beam directions at the same time. That is, the NCR does not support simultaneous multipath forwarding. This increases a multipath forwarding delay.

In addition, a forwarding direction (forwarding direction) of a current NCR access link is determined based on a UL/DL in a time division duplex (time division duplex, TDD) mode. The forwarding direction refers to downlink forwarding or uplink forwarding. In the TDD mode, time domain resources are classified into downlink transmission resources and uplink transmission resources. Therefore, when forwarded information indicates a time domain resource for forwarding, the NCR may determine a forwarding direction based on uplink transmission or downlink transmission corresponding to the time domain resource for forwarding in the TDD mode. However, in satellite communication, a frequency division duplex (frequency division duplex, FDD) mode is usually used in a communication system, and a downlink transmission resource or an uplink transmission resource cannot be determined based on a time domain resource. Therefore, in the FDD mode, the forwarding direction needs to be determined based on other signaling.

A terminal device in a satellite system may forward data to a gateway or a terrestrial station via an inter-satellite link, to establish a connection to a core network or an internet. Due to various restrictions, satellite operators cannot establish a large quantity of gateways or terrestrial stations around the world. As a result, satellite data near the gateways is centralized and capacity pressure of inter-satellite links increases level by level. To send data to the core network or establish the connection to the internet, a satellite that is far away from the GW forwards the data to the GW via an inter-satellite link, or sends data of the core network or the internet to the terminal device via the GW and the inter-satellite link.

In such an inter-satellite forwarding mechanism, a satellite closer to the GW needs to forward more satellite data to the GW. That is, as a quantity of forwarding layers increases, amount of data forwarded between satellites increases exponentially, increasing pressure of inter-satellite forwarding. In addition, due to movement of satellites (such as LEO satellites), different satellites become satellites closer to the GW in sequence. Therefore, almost all the satellites need to support a maximum inter-satellite forwarding capacity. This greatly increases satellite hardware costs. Based on the foregoing analysis, in the satellite communication network, transmission of backhaul data via the inter-satellite link causes large capacity pressure of inter-satellite multi-hop transmission and high satellite hardware costs.

It is considered that in the satellite system, data needs to be transmitted between the terminal device and the network device via the inter-satellite link, and the data is transmitted to the core network/base station via the relay node and the gateway/terrestrial station. Information transmitted between the terminal device and the network device needs to be forwarded by satellite devices (or referred to as relay nodes) on the inter-satellite link. Currently, directions of beams for forwarding information by the relay nodes are fixed, and the beams are all wide beams. Consequently, a signal-to-noise ratio of the forwarding is low. Therefore, how to improve performance of the transmission between the terminal device and the network device is currently hot research.

In view of this, this application provides a multi-hop forwarding mechanism of a satellite-to-ground forwarding network architecture, to ensure performance of transmission between a network device and a terminal device. The following describes in detail a communication method provided in embodiments of this application with reference to the accompanying drawings. For example, the communication method may be applied to any one or more of the scenarios shown in FIG. 1 to FIG. 10(2).

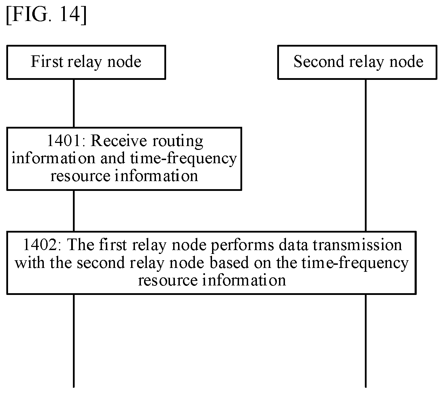

FIG. 14 is a schematic flowchart of a communication method according to an embodiment of this application. As shown in FIG. 14, the method may include the following steps.

1401: A first relay node receives routing information and time-frequency resource information.

The routing information is used to determine a second relay node, and the time-frequency resource information indicates a time-frequency resource for data transmission between the first relay node and the second relay node. In a possible implementation, the routing information includes: identification information of a destination relay node and identification information of a forwarding path; identification information of a forwarding path; identification information of the second relay node; satellite ephemeris information of the second relay node; position information of the second relay node; a forwarding port of the first relay node, where the forwarding port corresponds to the second relay node.

In an example, it is assumed that the first relay node is represented as a relay node #1, and the second relay node is represented as a relay node #2. The routing information includes the identification information of the destination relay node and the identification information of the forwarding path. The identification information of the destination relay node indicates a relay node #3, and an identifier of the path (path ID) is 2. The first relay node determines, based on a pre-configured or predefined path table (for example, Table 2), the relay node #3, and the path ID2, that a next relay node is the relay node #2.

**Table 2**

| Path ID (path index) | Specific path |
|---|---|
| 0 | Relay node #0→relay node #1→relay node #2 |
| 1 | Relay node #0→relay node #1→relay node #3 |
| 2 | Relay node #0→relay node #1→relay node #2→relay node #3 |
| ... | ... |

Based on Table 2, the first relay node may determine, based on the path ID2, that the specific forwarding path is: relay node #0→relay node #1→relay node #2→relay node #3. The first relay node determines that the destination node is the relay node #3, that is, the next relay node is the relay node #2.

It should be understood that Table 2 may be predefined or pre-configured for each relay node or device. This is not limited in this application.

It should be further understood that the specific paths in Table 2 are all described by using examples in which the relay node #1 forwards the data to the next relay node. Similarly, the path may alternatively be that the relay node #1 receives information from a previous relay node, and the routing information may indicate a specific relay node from which the relay node #1 needs to receive the forwarded information.

In another example, it is assumed that the first relay node is represented as a relay node #1, and the second relay node is represented as a relay node #2. The routing information includes the identification information of the second relay node. For example, the identification information of the second relay node is an ID of the second relay node. That is, the first relay node receives the routing information including the identification information of the second relay node, and the first relay node can determine the relay node #2. The first relay node may receive information forwarded by the relay node #2, or the first relay node may forward information to the relay node #2.

In still another example, it is assumed that the first relay node is represented as a relay node #1, and the second relay node is represented as a relay node #2. The routing information includes a forwarding port number of the first relay node. For example, a port #1 of the first relay node corresponds to the relay node #0, and a port #2 of the first relay node corresponds to the relay node #2. The routing information includes that the forwarding port number of the relay node #1 is the port #2, that is, the first relay node performs transmission of information through the port #2. The port #2 corresponds to the relay node #2. That is, the first relay node may forward the information to the relay node #2 through the port #2, or the first relay node may receive, through the port #2, the information forwarded by the relay node #2.

In yet another example, it is assumed that the first relay node is represented as a relay node #1, and the second relay node is represented as a relay node #2. The routing information includes the satellite ephemeris information/position information of the second relay node. For example, the first relay node can determine the second relay node based on the satellite ephemeris information/position information of the second relay node indicated in the routing information, and the first relay node receives the information forwarded by the second relay node, or forwards the information to the second relay node.

In a possible implementation, the time-frequency resource information may be the time-frequency resource for the data transmission between the first relay node and the second relay node. The time-frequency resource may include one or more of the following time-frequency resources: a time-frequency resource used by the first relay node to send information to the second relay node, a time-frequency resource used by the second relay node to send information to the first relay node, a time-frequency resource used by the first relay node to send information to a third relay node/network device/terminal device, or a time-frequency resource used by the first relay node to receive information from the third relay node/network device/terminal device. The third relay node is a node that can perform data transmission with the first relay node, and the third relay node is a node that is different from the second relay node and the first relay node.

It should be understood that when a plurality of time-frequency resources are configured, at least one of a forwarding mode, a forwarding direction, frequency information, and the like corresponding to each time-frequency resource may be configured for the time-frequency resource. The time-frequency resource in the time-frequency resource information corresponds to one or more of the forwarding mode, the forwarding direction, or the frequency information. The forwarding direction includes an uplink forwarding direction or a downlink forwarding direction. The frequency information indicates a frequency used when the first relay node performs the data transmission with the second relay node. For detailed descriptions of the forwarding direction and the frequency information, refer to subsequent detailed descriptions. Details are not described herein again.

It should be understood that the foregoing one or more time-frequency resources may be separately configured, or may be configured in same routing information. This is not limited in this application.

The data transmission may be uplink transmission or downlink transmission.

It should be understood that the routing information and the time-frequency resource information may be carried in a same piece of information for transmission, or may be carried in different information for separate transmission. For example, the routing information and the time-frequency resource information may be carried in a media access control (media access control, MAC) control element (control element, CE) message, or a radio resource control (radio resource control, RRC) message, or downlink control information (downlink control information, DCI). For another example, the routing information may be carried in a MAC-CE message, and the time-frequency resource information is carried in DCI; or the routing information may be carried in an RRC message, and the time-frequency resource information is carried in a MAC-CE. Details are not listed one by one in this application.

It should be understood that, that the first relay node receives the routing information may be that the first relay node receives the routing information from a network device (for example, a base station) or another relay node (for example, a fourth relay node), and determines, based on the routing information, a next relay node (for example, the second relay node) for forwarding. The first relay node forwards the forwarded data from a node that sends the routing information to a node indicated by the routing information, that is, the first relay node forwards the forwarded data from the base station or the fourth relay node to the second relay node.

1402: The first relay node performs the data transmission with the second relay node based on the time-frequency resource information.

For example, the first relay node receives the routing information and the time-frequency resource information. The first relay node determines the second relay node based on the routing information, and performs the data transmission with the second relay node based on the resource indicated by the time-frequency resource information.

It should be understood that the time-frequency resource received by the first relay node may be a time domain resource and/or a frequency domain resource. When the time-frequency resource received by the first relay node includes the time domain resource but does not include the frequency domain resource, the first relay node may determine, based on a default full bandwidth, or a frequency domain resource pre-configured via a system, or a frequency domain resource agreed on in a protocol, a frequency domain resource for the data transmission with the second relay node. Alternatively, when the time-frequency resource received by the first relay node includes the frequency domain resource but does not include the time domain resource, the first relay node may determine, based on a time domain resource pre-configured via a system or a time domain resource agreed on in a protocol, a time domain resource for the data transmission with the second relay node.

It should be understood that the time domain resource in this application may include one or more time domain units. The time domain unit may be a subframe (subframe), a frame (frame), a half-subframe, a half-frame, a slot (slot), a mini-slot (mini-slot), a partial slot (partial slot), an orthogonal frequency division multiplexing (orthogonal frequency division multiplexing, OFDM) symbol (symbol), or the like. The frequency domain resource in this application may include one or more frequency domain units. The frequency domain unit may be a resource block (resource block, RB), a subchannel, a resource pool (resource pool), a bandwidth (bandwidth), a bandwidth part (bandwidth part, BWP), a carrier (carrier, CC), a subcarrier, a channel (channel), a resource block (resource block, RB), an interlaced (interlace) RB, or the like.

It should be understood that, that the first relay node performs the data transmission with the second relay node based on the time-frequency resource may be that the first relay node determines, based on the time-frequency resource information, to receive information from the second relay node on the time-frequency resource indicated by the time-frequency resource information, or may be that the first relay node determines, based on the time-frequency resource information, to send information to the second relay node on the time-frequency resource indicated by the time-frequency resource information.

In a possible implementation, the first relay node determines a forwarding mode, and performs the data transmission with the second relay node based on the time-frequency resource information and the forwarding mode.

The forwarding mode is determined based on first information, and the forwarding mode includes transparent forwarding and regenerative forwarding. The first information may be received by the first relay node, and may be simultaneously or sequentially received with the routing information and the time-frequency resource information in step 1401. The first relay node receives the routing information, the time-frequency resource information, and the first information at the same time. That is, the three pieces of information may be carried in a same message, or may be carried in different messages. This is not limited in this application.

It should be further understood that the forwarding mode is indicated in an explicit indication manner, to indicate a forwarding mode for the data transmission between the first relay node and the second relay node. For example, the first relay node receives the first information, where the first information includes the forwarding mode, that is, the first information includes a regenerative forwarding mode or a transparent forwarding mode. The first relay node determines, based on the first information, whether to perform the data transmission with the second relay node in the regenerative forwarding mode or the transparent forwarding mode.

It should be further understood that the forwarding mode may not be directly indicated to the first relay node through information, and the first relay node needs to determine the forwarding mode by performing blind detection and/or decoding on a time-frequency resource of information (for example, second information) for the data transmission. When the first relay node performs the blind detection on the time-frequency resource of the second information to obtain information and/or correctly decode the second information, the first relay node performs the data transmission with the second relay node in the regenerative forwarding mode. When the first relay node fails to perform blind detection and/or decoding on the time-frequency resource of the second information, the first relay node performs the data transmission with the second relay node in the transparent forwarding mode.

It should be noted that, a part of the information for the data transmission between the first relay node and the second relay node may be transmitted in the regenerative forwarding mode, and a part of the information may be transmitted in the transparent forwarding mode. That is, a forwarding mode corresponding to the information transmitted between the first relay node and the second relay node may include a plurality of forwarding modes. For example, control information transmitted between the first relay node and the second relay node may be in the regenerative forwarding mode, and information transmitted between the terminal device and the network device and transmitted between the first relay node and the second relay node may be in the transparent forwarding mode.

It should be further understood that the first relay node performs the data transmission with the second relay node based on the time-frequency resource information and the forwarding mode. For example, the first relay node sends forwarded information to the second relay node based on the time-frequency resource information and the forwarding mode. The first relay node determines, based on the time-frequency resource information, a time-frequency resource for transmission of the forwarded information, and determines, based on the forwarding mode, whether operations such as decoding, reassembly, and encoding need to be performed on the forwarded information. It is assumed that the forwarding mode is the transparent forwarding mode. To be specific, the first relay node sends the forwarded information to the second relay node on the corresponding time-frequency resource in the transparent forwarding mode, without needing to perform operations such as decoding, reassembly, and encoding on the forwarded information. Alternatively, it is assumed that the forwarding mode is the regenerative forwarding mode. To be specific, the first relay node needs to perform operations such as decoding, reassembly, and encoding on the forwarded information (for example, the second information) based on the regenerative forwarding mode to determine third information, and sends the third information to the second relay node on a corresponding time-frequency resource. The third information may be information determined based on the second information in the regenerative forwarding mode.

It should be further understood that the first relay node has a regenerative forwarding function and/or a transparent forwarding function. When the first relay node has the regenerative forwarding function and the transparent forwarding function, the first relay node may perform the data transmission with the second relay node in the transparent forwarding mode and/or the regenerative forwarding mode. When the first relay node has the transparent forwarding function, the first relay node may perform the data transmission with the second relay node in the transparent forwarding mode. When the first relay node has the regenerative forwarding function, the first relay node may perform the data transmission with the second relay node in the regenerative forwarding mode.

In an example, it is assumed that the first relay node has the regenerative forwarding function and the transparent forwarding function, and the first relay node includes a mobile termination MT, a distributed unit DU, and a transparent forwarding unit (forwarding). The MT is configured to establish a first link. The first link can be used by the MT to connect to a DU of an upper-level device, and the first link is a control link. The DU is configured to establish a second link. The second link can be used to provide access for an MT of a next-level device, and the second link is a control link. The transparent forwarding unit is configured to provide the transparent forwarding function.

In another example, it is assumed that the first relay node has the transparent forwarding function, and the first relay node includes a mobile termination MT and a transparent forwarding unit (forwarding). The MT is configured to establish a first link. The first link can be used by the MT to connect to a DU of an upper-level device, and the first link is a control link. The transparent forwarding unit is configured to provide the transparent forwarding function.

In another example, it is assumed that the first relay node has the regenerative forwarding function, and the first relay node includes a mobile termination MT and a distributed unit DU. The MT is configured to establish a third link. The third link can be used by the MT to connect to a DU of an upper-level device, and the third link is a control link or a backhaul link. The DU is configured to establish a fourth link. The fourth link can be used to provide access for an MT of a next-level device or the terminal device, and the fourth link is a control link, a backhaul link, or an access link.

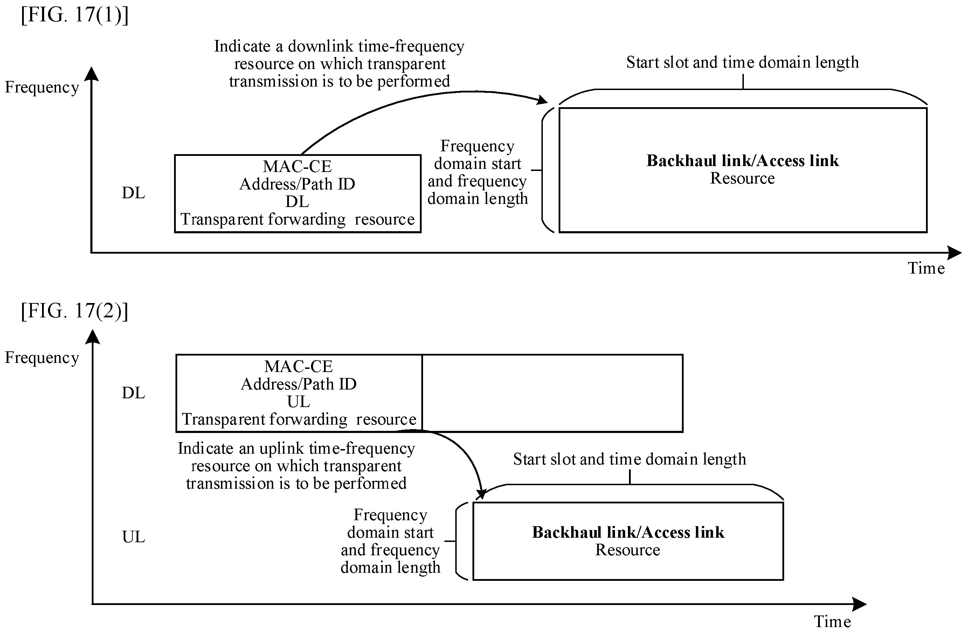

It should be understood that, when the first relay node has the regenerative forwarding function and the transparent forwarding function, or the first relay node has the regenerative forwarding function. For detailed descriptions of specific data transmission, refer to detailed examples in FIG. 17(1) to FIG. 24. Details are not described herein.

It should be understood that the second relay node is similar to the first relay node, and the second relay node has the transparent forwarding function and/or the regenerative forwarding function. When the second relay node has the regenerative forwarding function and the transparent forwarding function, the second relay node includes a mobile termination MT, a distributed unit DU, and a transparent forwarding unit. When the second relay node has the regenerative forwarding function, the second relay node includes a mobile termination MT and a distributed unit DU. When the second relay node has the transparent forwarding function, the second relay node includes a mobile termination MT and a transparent forwarding unit. Functions of the MT, the DU, and the transparent forwarding unit are similar to functions of the first relay node. Details are not described herein again.

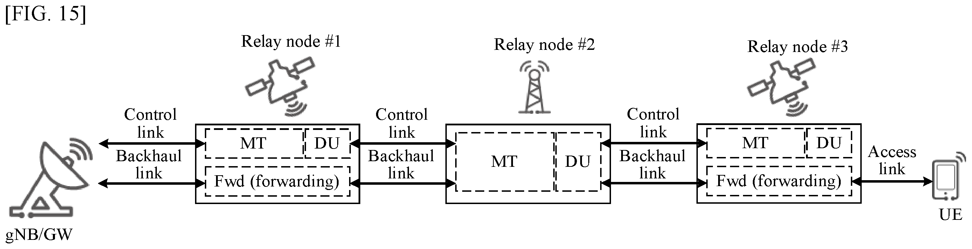

FIG. 15 is a diagram of a network architecture according to an embodiment of this application. It is assumed that the relay node #1 has the regenerative forwarding function and the transparent forwarding function, the relay node #2 has the regenerative forwarding function, and the relay node #3 has the regenerative forwarding function and the transparent forwarding function. The relay node #1 and the relay node #3 are satellite relay nodes, and the relay node #2 is a terrestrial relay node.

It should be understood that in the method provided in this application, the first relay node may be a satellite relay node or a terrestrial relay node, and the second relay node may be a satellite relay node or a terrestrial relay node. This is not specifically limited in this application. FIG. 15 is merely an example, and does not impose any limitation on the technical solutions in this application.

According to the method shown in FIG. 14, the first relay node performs the data transmission with the second relay node based on the received routing information and time-frequency resource information. The first relay node and the second relay node each may be a terrestrial relay node or a satellite relay node. Data transmission between the terminal device and the network device is performed via at least one relay node (for example, the first relay node), and a dynamic route change of the relay node is supported, to implement long-distance transmission between the terminal device and the network device, and ensure transmission performance.

In addition, the first relay node and the second relay node may be terrestrial relay nodes or satellite relay nodes. When the first relay node and/or the second relay node are/is terrestrial relay nodes/a terrestrial relay node, hardware costs and complexity of a satellite are reduced by leveraging advantages of low costs and high capabilities of the terrestrial relay nodes.

It should be noted that relay nodes (for example, the first relay node and the second relay node) in the method provided in this application may all be satellite relay nodes or terrestrial relay nodes, or some of the relay nodes may be satellite relay nodes and some of the relay nodes may be terrestrial relay nodes. This is not limited in this application.

Based on the method shown in FIG. 14, the method may further include the following steps.

The first relay node receives the forwarding direction.

The forwarding direction includes the uplink forwarding direction or the downlink forwarding direction. The first relay node may determine the second relay node based on the routing information and the forwarding direction, and perform transmission of forwarded data with the second relay node based on the time-frequency resource information and the forwarding direction. The first relay node performs the transmission of the forwarded data with the second relay node on a time-frequency resource corresponding to the forwarding direction based on the forwarding direction. The forwarding direction corresponds to the time-frequency resource.

It should be understood that the forwarding direction and at least one of the routing information, the time-frequency resource information, and the first information in the foregoing steps may be carried in a same piece of information for transmission, or may be carried in separate information for transmission.

It should be further understood that the forwarding direction may include the uplink forwarding direction or the downlink forwarding direction. The uplink/downlink forwarding direction is determined based on whether data transmitted between the network device and the terminal device is sent by the network device or sent by the terminal device. The forwarding direction may alternatively indicate the relay node to perform forward (forward) forwarding or backward (backward) forwarding. Whether the forward forwarding or the backward forwarding is performed may be determined based on a direction of the forwarding path.

In an example, with reference to the example in Table 2, it is assumed that the first relay node is represented as the relay node #1, and the second relay node is represented as the relay node #2. The routing information includes the identification information of the destination relay node and the identification information of the forwarding path. The identification information of the destination relay node indicates a relay node #3, and an identifier of the path (path ID) is 2. The first relay node determines, based on a pre-configured or predefined path table (for example, Table 2), the relay node #3, and the path ID2, that a next relay node is the relay node #2. When downlink forwarding is indicated, the first relay node forwards data of the relay node #0 to the relay node #2. When uplink forwarding is indicated, the first relay node forwards data of the relay node #2 to the relay node #0.

In another example, it is assumed that the first relay node is the relay node #2, a forwarding path 1 is pre-configured for the relay node #2, and the forwarding path 1 is: relay node #0→relay node #1→relay node #2→relay node #3. It is assumed that a forwarding direction from the relay node #0 to the relay node #3 is forward forwarding, and a forwarding direction from the relay node #3 to the relay node #0 is backward forwarding. The routing information includes routing information of the destination node, and an identifier of the destination node indicates the relay node #3. The relay node #2 receives a forward forwarding identifier, and the relay node #2 determines, based on the forward forwarding identifier and the destination relay node (the relay node #3), to forward the data to the relay node #3. The routing information includes the routing information of the destination node, and the identifier of the destination node indicates the relay node #0. The relay node #2 receives a backward forwarding identifier, and the relay node #2 determines, based on the backward forwarding identifier and the destination relay node (the relay node #0), to forward the data to the relay node #1.

It should be further understood that the first relay node receives the forwarding direction, and the first relay node receives the routing information based on step 1401. The routing information may further include routing information of the first relay node. When the first relay node performs the data transmission with the second relay node based on the time-frequency resource information, both routing information of a transmit end and routing information of a receive end may be included. Therefore, when receiving data information forwarded by the transmit end, the receive end can determine a direction of a receive beam. When forwarding data information to the receive end, the transmit end can determine a direction of a transmit beam. The routing information may further include one or more of the following: a beam position index, position information of the terminal device, identification information of the terminal device, an index number of the terminal device, a beam index, a reference position, angle information of a beam, or the identification information of the second relay node.

The beam position index indicates a terrestrial beam position area. The ground is divided and numbered based on beam positions (that is, a terrestrial area is divided, and different partitions are referred to as beam positions), and a beam position for forwarding data transmission is indicated by using a beam position index, that is, a beam coverage area for forwarding data can be determined. The position information of the terminal device is used by the relay node to determine a beam direction between a position of the relay node and the terminal device, that is, the beam direction for forwarding data can be determined. The relay node pre-stores a correspondence between the identification information/index number of the terminal device and the position information of the terminal device, determines the position information of the terminal device based on the identification information/index number of the terminal device, and further determines, with reference to the position information of the relay node, a beam direction for forwarding data. The beam index may be a beam precoding index or a beam index. The beam precoding index indicates used precoding (a pre-configured precoding index table or a precoding index table configured via the base station), that is, the relay node determines, based on the beam precoding index, the beam direction for forwarding data. The beam index corresponds to a predefined beam direction, beam width, or the like, that is, the relay node determines, based on a correspondence between the beam index and the predefined beam direction, the beam direction for forwarding data. The relay node may determine an elevation angle θ and an azimuth angle φ of the beam based on the angle information of the beam (for example, determine an angle by using an antenna panel of the relay node as a coordinate system), to determine a beam direction for forwarding data by the relay. The relay node may determine, based on a correspondence between the identification information of the second relay node and the position information of the second relay node, a beam direction for forwarding data. The relay node determines, based on reference position information and the position information of the relay node, a beam direction for forwarding data.

Based on the method shown in FIG. 14, the method may further include the following steps.

The first relay node receives the frequency information. The frequency information indicates information about a frequency used when the first relay node performs transmission of forwarded data with the second relay node. For example, the frequency is 20 GHz, 30 GHz, or the like. The first relay node may determine the second relay node based on the routing information, and perform, based on the time-frequency resource information and the frequency information, the transmission of the forwarded data with the second relay node at the frequency indicated by the frequency information and on a time-frequency resource corresponding to the frequency. The time-frequency resource corresponds to the frequency.

It should be understood that the frequency information and at least one of the routing information, the time-frequency resource information, the first information, and the forwarding mode in the foregoing steps may be carried in a same piece of information for transmission, or may be carried in separate information for transmission.

It should be further understood that a frequency at which a relay node receives forwarded information may be the same as or different from a frequency at which the same relay node sends the forwarded information.

In an example, assuming that both the first relay node and the second relay node are satellite relay nodes, a frequency #1 used by the first relay node to send the forwarded information to the second relay node may be the same as or different from a frequency #2 used by the second relay node to send the forwarded information to the first relay node. For example, both the frequency #1 and the frequency #2 are low frequencies (frequencies), and forwarding at a low frequency has low propagation losses.

In another example, when the first relay node is a terrestrial relay node and the second relay node is a satellite relay node, a frequency #1 used by the first relay node to send the forwarded information to the second relay node may be different from a frequency #2 used by the second relay node to send the forwarded information to the first relay node. Generally, the frequency #1 may be a high frequency, and the frequency #2 is a low frequency. A low frequency used by a satellite can reduce link propagation losses and reduce power consumption of the satellite. The first relay node is a terrestrial relay node. When the terrestrial relay node forwards information to a satellite relay node, a high frequency is generally used, so that data can be sent through uplink and downlink frequency division, to avoid interference.

Based on the foregoing descriptions in FIG. 14, that the first relay node performs the data transmission with the second relay node based on the routing information and the time-frequency resource information may be specifically: The first relay node determines the second relay node based on the routing information, and performs, based on the time-frequency resource information and the frequency information, the data transmission with the second relay node on the corresponding time-frequency resource based on the frequency information; or the first relay node determines the second relay node based on the routing information, and the first relay node performs the data transmission with the second relay node based on the time-frequency resource information, the forwarding mode, and the frequency information; or the first relay node determines the second relay node based on the routing information and the forwarding direction, and performs the data transmission with the second relay node based on the time-frequency resource, the forwarding mode, and the frequency information. The first relay node may determine the second relay node based on the routing information, or based on information such as the routing information and the forwarding direction. When the first relay node performs the data transmission with the second relay node, the first relay node may determine, based on one or more of the time-frequency resource, the forwarding mode, or the frequency information, a time-frequency resource, a forwarding mode, a forwarding frequency, and/or the like for the data transmission. It should be understood that a person skilled in the art may determine, in different combination manners based on one or more of the foregoing information disclosed in this application, one or more of a mode of the data transmission between the first relay node and the second relay node, a time-frequency resource for the transmission, or frequency information. Details are not listed one by one in this application.

It should be further understood that signaling information in this application, for example, the routing information, the time-frequency resource information, information about the forwarding direction, the first information (the forwarding mode), the forwarding frequency information, a threshold, and a path table (for example, Table 2), may be all included in at least one of broadcast information such as a system information block (system information block, SIB) 1, a SIB 19, other system information (other system information, OSI), a master information block (master information block, MIB), or a physical broadcast channel (physical broadcast channel) message. Specifically, the network device may send the signaling information to a relay node (the relay node accesses the network device as a terminal device) in a broadcast or multicast manner. The network device sends the foregoing signaling to the relay node in the broadcast or multicast manner, so that different resources are not scheduled for different terminal devices to send the foregoing signaling, to reduce signaling overheads for scheduling resources and reduce system scheduling complexity.

In addition, if the signaling information is sent in a radio resource control (radio resource control, RRC) connection establishment phase and a subsequent communication process, the network device may include the foregoing signaling in at least one of RRC signaling (for example, an RRC setup (RRC setup) message, RRC reconfiguration signaling (RRC Reconfiguration), or RRC resume signaling (RRC Resume)), downlink control information (downlink control information, DCI), group DCI, or a media access control (media access control, MAC) control element (control element, CE), or indicate the foregoing signaling/a parameter value to the relay node through a table, or include the foregoing signaling in data for transmission or include the foregoing signaling in a separately allocated physical downlink shared control channel (physical downlink shared channel, PDSCH) for unicast or multicast sending to the relay node. The network device sends the foregoing signaling to the relay node individually or in a group, so that a parameter value of each relay apparatus/each group of relay apparatuses can be flexibly controlled, and different parameter values are configured for the terminal device based on different positions or different areas in which the relay node is located, to optimize a system parameter and optimize communication performance of the relay apparatus/system communication performance. For example, the network device may configure different information such as routing information and forwarding frequencies for the relay node based on different positions of the relay node, to optimize a forwarding delay and a forwarding link budget of each relay apparatus/each group of relay apparatuses, and improve forwarding and communication efficiency of the relay apparatus.

Based on the foregoing method, it is assumed that the first relay node receives a MAC CE message, where the MAC CE message includes routing information, a forwarding direction, a forwarding time-frequency resource, and a forwarding mode, and the routing information includes identification information of a destination node and identification information of a path.

As shown in FIG. 17(1), downlink transmission is used as an example. The first relay node sends forwarded data to the second relay node based on the routing information, the forwarding direction, the forwarding time-frequency resource, and the forwarding mode in the received MAC CE message. For example, the routing information includes identification information of the second relay node. The MAC CE message shown in FIG. 17(1) includes: address, indicating an identifier of the second relay node; DL, indicating downlink transmission; and transparent forwarding resource, indicating a transparent forwarding mode. The forwarding time-frequency resource includes a time domain resource and a frequency resource. An indication parameter corresponding to the time domain resource may include a start position (for example, a start slot) and a time domain length of the time domain resource. The time domain length may be indicated by using a quantity of consecutive time units. An indication parameter corresponding to the frequency domain resource in the forwarding time-frequency resource may include a start position (for example, a start RB index number) and a frequency domain length of the frequency domain resource. The frequency domain length may be indicated by using a quantity of occupied frequency domain units. Optionally, a start position of the forwarding time-frequency resource is determined based on a position of the time-frequency resource of the received MAC CE message. For example, a time-frequency resource for forwarding data may be determined by the first relay node based on a relative value of a position of a time-frequency resource on which control signaling is located. It is assumed that a time domain resource on which the control signaling is located is a slot n, and a resource block with a minimum frequency domain sequence number of a frequency domain resource on which the control signaling is located is RB x. In this case, a start position of the time-frequency resource for forwarding data is a slot n+k, and a start position of a frequency domain resource is RB x+m. Both k and m are offset values. Values of k and m may be configured via the base station/system. Specific values are not limited in this application. The first relay node determines the start position of the time-frequency resource for forwarding data, a value of the time domain length, and a value of the frequency domain length. This is not limited in this application.

It should be understood that, it is assumed that the MAC CE message indicates that the forwarding direction is uplink transmission, as shown in FIG. 17(2), FIG. 17(2) is similar to FIG. 17(1). Details are not described herein again.

It should be further understood that the MAC CE message may not include one or more of the forwarding direction, the forwarding mode, or the frequency information. The forwarding direction, the forwarding mode, and the frequency information may be indicated by using separate signaling. FIG. 17(1) and FIG. 17(2) are merely examples, and do not impose any limitation on the technical solutions in this application.

It should be further understood that the routing information shown in FIG. 17(1) and FIG. 17(2) may further include the identification information of the destination node and the identification information of the path (for example, a path identifier in Table 2), or the port number (for example, the port 2) of the first relay node. The port 2 corresponds to the second relay node, or includes the position information/ephemeris information of the second relay node. Examples are not described one by one in this application.

It should be further understood that FIG. 17(1) and FIG. 17(2) are described by using transparent transmission (transparent forwarding) as an example. This example is also applicable to the regenerative forwarding mode. Details are not described herein again.

Based on the descriptions in FIG. 14, in step 1401, the first relay node receives the routing information, and the first relay node forwards the forwarded data from the node that sends the routing information to the node indicated by the routing information. The routing information may further include a first parameter and a second parameter. The first parameter and the second parameter may respectively indicate the first relay node to receive the forwarded data from a node/device indicated by the first parameter, and send the forwarded data to a node/device indicated by the second parameter. Alternatively, the first parameter and the second parameter may respectively indicate the first relay node to receive the forwarded data from a node/device indicated by the second parameter, and send the forwarded data to a node/device indicated by the first parameter.

It should be understood that the first parameter may indicate a node/device/beam direction from which the first relay node receives the forwarded data, and the second parameter may indicate a node/device/beam direction from which the first relay node sends the forwarded data. Alternatively, the first parameter may indicate a node/device/beam direction from which the first relay node sends the forwarded data, and the second parameter may indicate a node/device/beam direction from which the first relay node receives the forwarded data.

In an example, the first parameter and/or the second parameter are/is specifically represented as any one or more of the following examples: the identification information of the destination relay node and the identification information of the forwarding path, identification information of a next relay node and/or a previous relay node of the first relay node, satellite ephemeris information/position information of the next relay node and/or the previous relay node, a forwarding port, a beam position index, a position of the terminal device, identification information of the terminal device, a beam index (a beam precoding index or a beam index), a reference position, angle information of a beam position, or the like. The forwarding port may correspond to the previous relay node and/or the next relay node of the first relay node.

It should be understood that a person skilled in the art may determine, with reference to one or more of the forwarding mode, the time-frequency resource, the forwarding frequency information, or the forwarding direction in FIG. 14, a transmission process of the forwarded data based on the first parameter and the second parameter that are included in the routing information. Specific examples are not listed one by one in this application.

In a possible implementation, the routing information includes the first parameter and the second parameter. It is assumed that the first parameter indicates the relay node #0, the second parameter indicates the relay node #2, and the first relay node is the relay node #1. A data transmission direction is as follows: Relay node #0→relay node #1→relay node #2 is uplink transmission, and relay node #2→relay node #1→relay node #0 is downlink transmission.

It is assumed that the first relay node determines the relay node #0 based on the first parameter in the routing information, and determines the relay node #2 based on the second parameter. The first relay node determines, based on a received forwarding direction, whether uplink transmission or downlink transmission is performed, and receives and sends the forwarded data on corresponding time-frequency resources based on the forwarding time-frequency resource. For example, the received forwarding direction of the first relay node is an uplink transmission direction. To be specific, the first relay node receives, on a corresponding time-frequency resource based on the forwarding time-frequency resource, the forwarded data sent by the relay node #0, and sends the forwarded data to the relay node #2 on the corresponding time-frequency resource. The received forwarding direction of the first relay node is a downlink transmission direction. To be specific, the first relay node receives, on a corresponding time-frequency resource based on the forwarding time-frequency resource, the forwarded data sent by the relay node #2, and sends the forwarded data to the relay node #0 on the corresponding time-frequency resource.

It should be understood that the forwarding path may be pre-configured, or agreed on in a protocol, or predefined for the first relay node. This is not limited in this application.

In another possible implementation, the routing information includes the first parameter and the second parameter. It is assumed that the first parameter indicates the relay node #0, the second parameter indicates the relay node #2, and the first relay node is the relay node #1. It is predefined or pre-configured via the system that a relay node corresponding to the first parameter is a relay node from which the first relay node receives the forwarded data, and a relay node corresponding to the second parameter is a relay node to which the first relay node sends the forwarded data. Alternatively, it is predefined or pre-configured via the system that a relay node corresponding to the first parameter is a relay node to which the first relay node sends the forwarded data, and a relay node corresponding to the second parameter is a relay node from which the first relay node receives the forwarded data.

It should be understood that, it may be predefined or pre-configured via the system or it is agreed on in the protocol that the relay node #1 receives the forwarded data from the relay node #0, and the relay node #1 sends the forwarded data to the relay node #2; or the relay node #1 receives the forwarded data from the relay node #1, and the relay node #1 sends the forwarded data to the relay node #0. The first relay node may determine, based on the routing information, information about a node corresponding to receiving and sending of the forwarded data. That is, a forwarding direction may not need to be configured for the first relay node.

It is assumed that the first relay node determines the relay node #0 based on the first parameter in the routing information, and determines the relay node #2 based on the second parameter. The first relay node determines, based on the forwarding time-frequency resource and the information pre-configured in the system, to receive the forwarded data and send the forwarded data on the corresponding time-frequency resources. It is assumed that the relay node #1 receives the forwarded data from the relay node #0 and the relay node #1 sends the forwarded data to the relay node #2, where this is pre-configured via the system or agreed on in the protocol. The first relay node receives, on the corresponding time-frequency resource based on the forwarding time-frequency resource, the forwarded data sent by the relay node #0, and sends the forwarded data to the relay node #2 on the corresponding time-frequency resource. It is alternatively assumed that the relay node #1 receives the forwarded data from the relay node #2 and the relay node #1 sends the forwarded data to the relay node #0, where this is pre-configured via the system. The first relay node receives, on the corresponding time-frequency resource based on the forwarding time-frequency resource, the forwarded data sent by the relay node #2, and sends the forwarded data to the relay node #0 on the corresponding time-frequency resource.

It should be understood that the first relay node determines the corresponding relay node #0 and relay node #2 based on the first parameter and the second parameter in the routing information. The first relay node may receive and/or send the forwarded data on the corresponding forwarding time-frequency resource, based on an indicated forwarding direction, or a relay node corresponding to receiving/sending of the forwarded data and pre-configured via the system or agreed on in the protocol, or a forwarding direction pre-configured via the system or agreed on in the protocol. In a process in which the first relay node performs transmission of the forwarded data, the first relay node may alternatively perform the transmission of the forwarded information based on the forwarding mode and/or the frequency information. The forwarding mode used by the first relay node may be the regenerative forwarding mode or the transparent forwarding mode. The forwarding mode may be indicated to the first relay node through signaling, or the first relay node selects, based on a capability of the first relay node, a forwarding mode supported by the first relay node to forward the forwarded data. For a specific forwarding mode and frequency information, refer to detailed descriptions in FIG. 14. Details are not described herein again.

The following describes, with reference to downlink transmission and uplink transmission, a specific example in which the relay node determines a beam direction for receiving/sending the forwarded data. In the example in which the relay node determines the beam direction, a downlink transmission direction is used as an example. It is assumed that the relay node is a last relay node in a transmission process, that is, a method for determining the beam direction when the relay node sends the forwarded data to the terminal device. An uplink transmission direction is used as an example. It is assumed that the relay node is a 1^{st} relay node in a transmission process, that is, the relay node determines the beam direction and receives the forwarded data from the terminal device.

It should be understood that the relay node receives information indicating a previous relay node and/or a next relay node, and information indicating the relay node may be from the foregoing routing information. The relay node determines the previous relay node and/or the next relay node of the relay node based on the information indicating the previous relay node and/or the next relay node. The previous relay node of the relay node may be a node that sends the forwarded information or the routing information to the relay node, and the next relay node of the relay node may be a relay node that receives the forwarded information sent by the relay node. The relay node forwards the forwarded data from the previous relay node to the next relay node.

For example, the information indicating the previous relay node and/or the next relay node may include one or more of the identification information of the destination node and the identification information of the path, identification information of the previous relay node and/or the next relay node, a forwarding port number, a beam index (a beam precoding index or beam index), satellite ephemeris/position information of the previous relay node and/or the next relay node, or the like. The forwarding port number corresponds to the previous relay node and/or the next relay node, the forwarding port corresponds to a beam index corresponding to the previous relay node and/or the next relay node, and a beam direction corresponding to the beam index corresponds to the previous relay node and/or the next relay node.

It should be further understood that the relay node may further determine a coverage area. The coverage area indicates a coverage area to which a beam for receiving the forwarded data by the relay node, and/or a coverage area to which a beam for sending the forwarded data by the relay node points. The relay node receives and/or sends the forwarded data based on the coverage area to which the receive beam points and/or the coverage area to which the transmit beam points.

For example, the relay node may determine the coverage area based on one or more of a beam position index, a number or an index number of a UE, a position of the UE, a beam index (a beam precoding index or a beam index), a reference position, or angle information of a beam. The coverage area indicates a coverage area in which the relay node receives the forwarded data and/or a coverage area in which the relay node sends the forwarded data.

It should be further understood that when the relay node receives and/or sends the forwarded data, the relay node may perform transmission of the forwarded data based on information such as the time-frequency resource information, the forwarding direction, and the forwarding mode. For descriptions of the forwarding direction, the time-frequency resource information, and the forwarding mode, refer to the descriptions in FIG. 14. Details are not described herein again.

Example 1: It is assumed that the second relay node is a last relay node in a downlink transmission direction, and the second relay node forwards information to the terminal device.

When the second relay node is the last relay node in the downlink transmission direction, the second relay node may determine, based on the identification information of the destination relay node included in the routing information being the identification information of the second relay node, or information like the identification information of the second relay node or the position information/satellite ephemeris information of the second relay node, that the second relay node is the last relay node. Alternatively, the routing information may further include an end flag/identifier for stopping forwarding by the relay node, and the end flag is used by the second relay node to determine that the second relay node is the last relay node.

(1.1) The second relay node may determine, based on the beam position index, the forwarding direction, and the time-frequency resource information in the routing information, a terrestrial beam position area, a forwarding direction, and a time-frequency resource that are for forwarding the information. The second relay node forwards the information to the terminal device based on the terrestrial beam position area, the forwarding direction, and the time-frequency resource.

The ground is divided and numbered based on beam positions. The second relay node determines, based on a beam position index number, an indicated beam position (signal coverage area) to which the forwarded information is to be forwarded, that is, the second relay node can determine a beam coverage area in which the forwarded information is sent.

(1.2) The second relay node may determine, based on the position of the UE, the forwarding direction, and the time-frequency resource that correspond to the forwarded information and indicated in the routing information, a beam direction for forwarding the information.

The second relay node may obtain the beam direction through calculation based on the position information of the UE and the position information of the second relay node, that is, the second relay node can determine a direction of a transmit beam.

(1.3) The second relay node determines, based on the number or index number of the UE, the forwarding direction, and the time-frequency resource that are of the forwarded information and indicated in the routing information, a beam direction for forwarding the information.

The second relay node pre-stores a correspondence between the index number of the UE and the position information of the UE (or pre-stores a correspondence between the index number of the UE and the beam coverage area), and the second relay node may determine, based on the index number of the UE, the position of the UE or a beam on which the UE is located, that is, determine a direction of a transmit beam.

(1.4) The second relay node determines, based on the beam direction, the forwarding direction, and the time-frequency resource that are of the forwarded information and indicated in the routing information, a beam direction for forwarding the information.

The beam direction is determined based on used precoding (a pre-configured precoding index table or a precoding index table configured via the base station) indicated by the beam precoding index.

Optionally, a beam precoding list, namely, a mapping table between an index and a precoding parameter, is configured for or sent to the second relay node in advance (for example, sent through RRC signaling). Then, the beam precoding index is sent to the second relay node (for example, sent through a MAC CE or DCI signaling). The second relay node determines a direction of a transmit beam based on the beam precoding index.

(1.5) The second relay node determines, based on the beam direction, the forwarding direction, and the time-frequency resource that are of the forwarded information and indicated in the routing information, a beam direction for forwarding the information.

The beam direction is determined based on a mapping relationship between a beam index and a predefined beam direction, beam width, or the like. The mapping relationship between the beam index and the predefined beam direction, beam width, or the like is pre-configured or predefined.

(1.6) The second relay node determines, based on the reference position, the forwarding direction, and the time-frequency resource that are of the forwarded information and indicated in the routing information, a beam direction for forwarding the information. The reference position may be a position of a reference point within beam coverage.

The second relay node may obtain the beam direction through calculation based on the reference position and the position information of the second relay node, that is, determine the beam direction for forwarding the information.

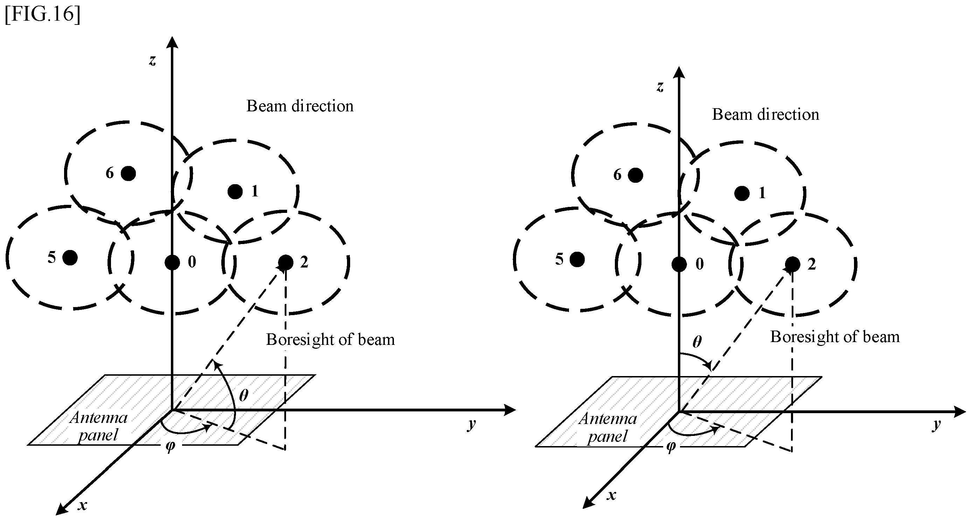

(1.7) The second relay node determines, based on the angle information (for example, the elevation angle θ or the azimuth angle φ) of the beam, the forwarding direction, and the time-frequency resource that are of the forwarded information and indicated in the routing information, a beam direction for forwarding the information. For example, the second relay node may determine the elevation angle θ and the azimuth angle φ of the beam based on an antenna panel of the second relay node as a coordinate system, that is, determine the beam direction for forwarding the information by the second relay. As shown in FIG. 16, an antenna panel is used as a reference system, an elevation angle θ and an azimuth angle φ may be defined in the figure, and a boresight (boresight) of a beam is pointed at the elevation angle θ and the azimuth angle φ.

Example 2: It is assumed that the first relay node is a 1^{st} relay node in an uplink transmission direction, and the first relay node receives forwarded information of the terminal device.

When the first relay node is the 1^{st} relay node in the uplink transmission direction, the first relay node may determine, based on the routing information of the first relay node in the routing information and one or more of the beam position index, the position information of the terminal device, the identification information of the terminal device, the index number of the terminal device, the beam index, the reference position, or the beam, a receive beam direction for receiving the forwarded information of the terminal device.

(2.1) The first relay node may determine, based on the beam position index, the forwarding direction, and the time-frequency resource information in the routing information, a terrestrial beam position area, a forwarding direction, and a time-frequency resource that are for forwarding the information. The first relay node receives the forwarded information of the terminal device based on the terrestrial beam position area, the forwarding direction, and the time-frequency resource.

The ground is divided and numbered based on beam positions. The first relay node determines, based on a beam position index number, to receive the forwarded information of the terminal device and forward the forwarded information to a next relay node (for example, the second relay node).

(2.2) The first relay node may determine, based on the position of the UE, the forwarding direction, and the time-frequency resource that correspond to the forwarded information and indicated in the routing information, the beam direction for receiving the forwarded information of the terminal device.

The first relay node may obtain the beam direction through calculation based on the position information of the UE and the position information of the first relay node, that is, the first relay node can determine the direction of the receive beam.

(2.3) The first relay node determines, based on the number or index number of the UE, the forwarding direction, and the time-frequency resource that are of the forwarded information and indicated in the routing information, the beam direction for receiving the forwarded information of the terminal device.

The first relay node pre-stores a correspondence between the index number of the UE and the position information of the UE (or pre-stores a correspondence between the index number of the UE and the beam coverage area), and the first relay node may determine, based on the index number of the UE, a position of the UE or a beam on which the UE is located, that is, determine the direction of the receive beam.

(2.4) The first relay node determines, based on the beam direction, the forwarding direction, and the time-frequency resource that are of the forwarded information and indicated in the routing information, the beam direction for receiving the forwarded information of the terminal device.

The beam direction is determined based on used precoding (a pre-configured precoding index table or a precoding index table configured via the base station) indicated by the beam precoding index.

Optionally, a beam precoding list, namely, a mapping table between an index and a precoding parameter, is configured for or sent to the first relay node in advance (for example, sent through RRC signaling). Then, the beam precoding index is sent to the first relay node (for example, sent through a MAC CE or DCI signaling). The first relay node determines the direction of the receive beam based on the beam precoding index.

(2.5) The first relay node determines, based on the beam direction, the forwarding direction, and the time-frequency resource that are of the forwarded information and indicated in the routing information, the beam direction for receiving the forwarded information of the terminal device.

The beam direction is determined based on a mapping relationship between a beam index and a predefined beam direction, beam width, or the like. The mapping relationship between the beam index and the predefined beam direction, beam width, or the like is pre-configured or predefined.

(2.6) The first relay node determines, based on the reference position, the forwarding direction, and the time-frequency resource that are of the forwarded information and indicated in the routing information, the beam direction for receiving the forwarded information of the terminal device. The reference position may be a position of a reference point within beam coverage.

The first relay node may obtain the beam direction through calculation based on the reference position and the position information of the first relay node, that is, determine the beam direction for receiving the forwarded information.

(2.7) The first relay node determines, based on the angle information (for example, the elevation angle θ or the azimuth angle φ) of the beam, the forwarding direction, and the time-frequency resource that are of the forwarded information and indicated in the routing information, the beam direction for receiving the forwarded information of the terminal device. For example, the first relay node may determine the elevation angle θ and the azimuth angle φ of the beam based on an antenna panel of the first relay node as a coordinate system, that is, determine the beam direction for the first relay to receive the forwarded information, for example, point a boresight of the beam at the elevation angle θ and the azimuth angle φ.

It should be understood that this application is described by using an example in which the second relay node serves as the last relay node in the downlink transmission to determine the transmit beam and forward the forwarded information to the terminal device; and the first relay node serves as the first relay node in the uplink transmission to determine the receive beam and receive the forwarded information from the terminal device. Certainly, when the first relay node/the second relay node may alternatively be an intermediate relay node in a forwarding process, the first relay node/the second relay node is also applicable to a scenario in which a receive beam for receiving forwarded information of a previous relay node or a transmit beam for sending forwarded information to a next relay node is determined. In downlink transmission, the next relay node is equivalent to the terminal device described above. In uplink transmission, the previous relay node is equivalent to a terminal device. In addition, when the base station sends instructions to a relay node, the relay node is equivalent to a terminal, and a previous forwarding node of the relay node is equivalent to a last downlink node or a 1^{st} uplink node. Examples are not listed one by one in this application.

Based on the example 1 and the example 2, the routing information includes the routing information of the first relay node, and the routing information can be used to determine the direction of the receive beam and/or the direction of the transmit beam. The direction of the receive beam and/or the direction of the transmit beam may be determined based on one or more of the beam position index, the position information of the terminal device, the identification information of the terminal device, the index number of the terminal device, the beam index, or the reference position in the routing information.

Based on the foregoing method descriptions, when the relay node (for example, the first relay node or the second relay node) includes the mobile termination MT, the distributed unit DU, and the transparent forwarding unit, or when the relay node (for example, the first relay node or the second relay node) includes the mobile termination MT and the transparent forwarding unit, or when the relay node (for example, the first relay node or the second relay node) includes the mobile termination MT and the distributed unit DU, a specific diagram of a protocol stack for forwarding data is described in detail by using FIG. 17(1) to FIG. 23 as examples in this application. When a relay apparatus includes a mobile termination MT, the relay apparatus may serve as a terminal to access a previous parent node.

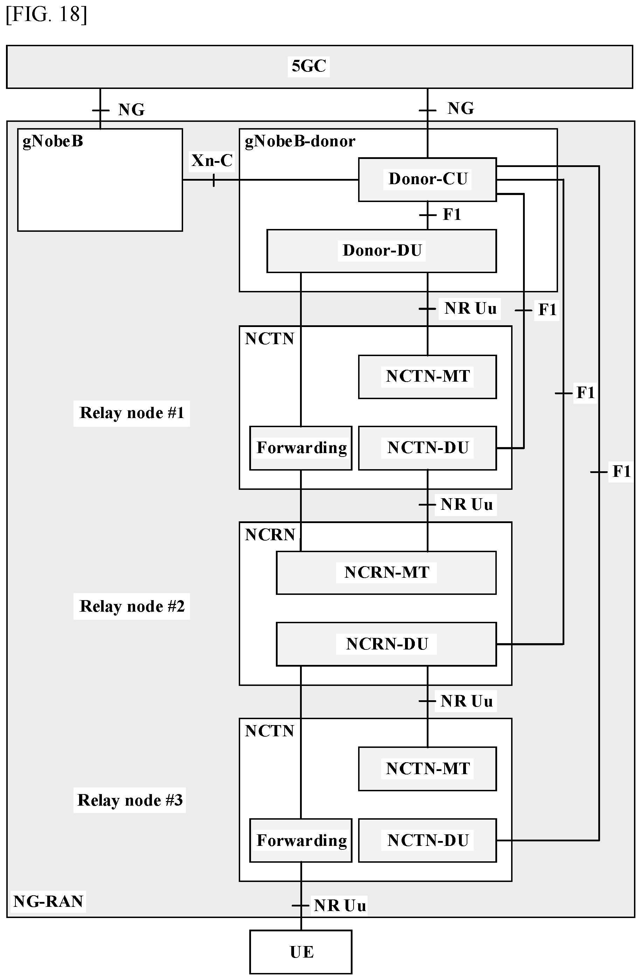

It is assumed that the relay node includes the mobile termination MT, the distributed unit DU, and the transparent forwarding unit, and is referred to as a network controlled transparent forwarding node (network controlled transparent node) in FIG. 17(1) to FIG. 23. In embodiments of this application, NCTN is used for indication, and the NCTN may have another name. This is not limited in this application. The NCTN has a regenerative forwarding function and a transparent forwarding function, that is, the NCTN may forward data in a regenerative forwarding mode or in a transparent forwarding mode. It is assumed that the relay node includes the mobile termination MT and the distributed unit DU, and is referred to as a network controlled regenerative forwarding node (network controlled regenerative node) in FIG. 18 to FIG. 25. In embodiments of this application, NCRN is used for indication, and the NCRN may have another name. This is not limited in this application. The NCRN has a regenerative forwarding function, that is, the NCRN may forward data in a regenerative forwarding mode.

FIG. 18 is a diagram of a network architecture between an NCTN and an NCRN according to an embodiment of this application. An F1 interface is used for a connection between a gNobeB-donor-CU and each of an NCTN-DU and an NCRN-DU, and is inherited from an F1 interface between a DU and a CU. A Uu air interface is used for a connection between a donor-DU and an NCTN-MT, a connection between the NCTN-DU and an NCRN-MT, and a connection between the NCRN-DU and the NCTN-MT. An NCTN-MT of a relay node #1 in FIG. 18 accesses the gNobeB as a terminal device, to establish a Uu interface connection. An NCRN-MT of a relay node #2 accesses an NCTN-DU of the relay node #1 as a terminal device, to establish a Uu interface connection. An NCTN-MT of a relay node #3 accesses an NCRN-DU of the relay node #2 as a terminal device, to establish a Uu interface connection.

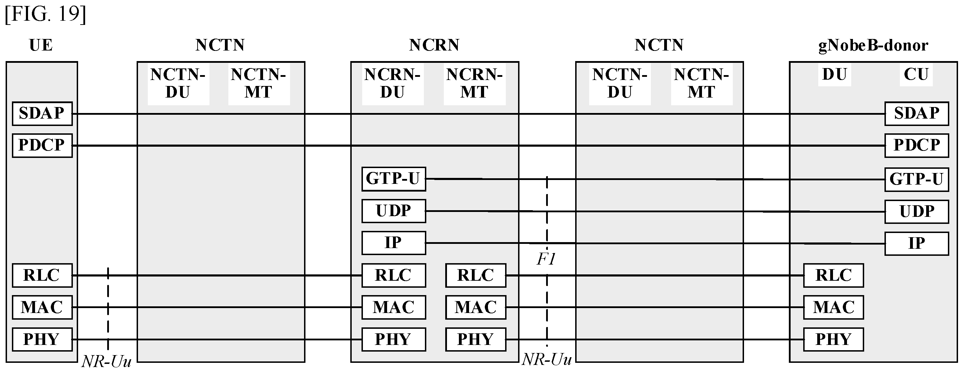

FIG. 19 is a diagram of a user plane protocol stack according to an embodiment of this application. FIG. 19 is a diagram of a user plane protocol stack from a perspective of a terminal device, and transmission is implemented via a backhaul link. An NCTN in FIG. 19 performs transparent transmission processing (forwarding) on data transmitted between a UE and a gNB. An NCRN performs, via an MT and a DU, regenerative forwarding on the data transmitted between the UE and the gNB, that is, performs operations such as decoding, reassembly, and encoding. The NCRN supports forwarding to an RLC layer during the regenerative forwarding. GTP-U, UDP, and IP layers are inherited from CU-DU separation, and provide a channel for data transmission between a CU and a DU.

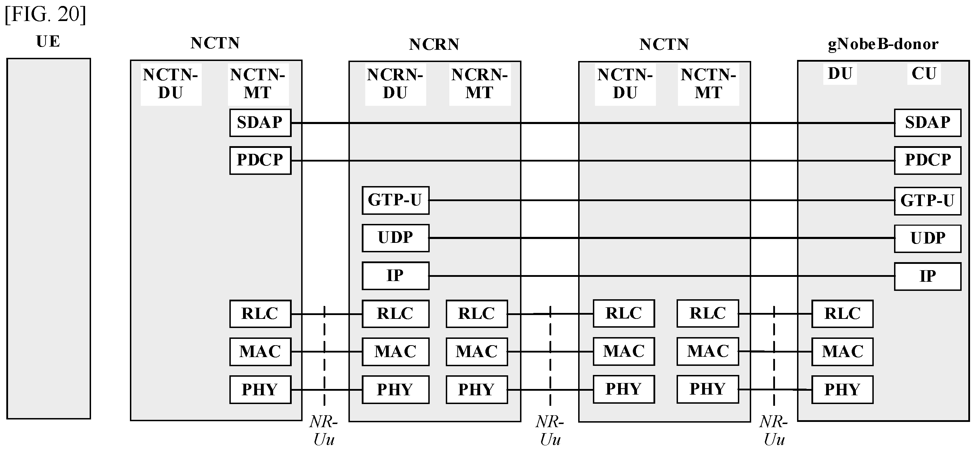

FIG. 20 is a diagram of another user plane protocol stack according to an embodiment of this application. FIG. 20 is a diagram of a user plane protocol stack from a perspective of an NCTN, and transmission is implemented via a control link. A gNB sends control instructions to an NCTN-MT. A protocol stack from a perspective of an NCRN-MT is similar to that in FIG. 19.

As shown in FIG. 20, an NCTN may establish a connection to an MT of a next node via an NCTN-DU, and may use a beam alignment method (for example, a method for sweeping a beam at a transmit end and feeding back a maximum SNR beam index by a receive end) in a conventional technology to support beam alignment with the next node and send a narrow beam, to improve reliability of the control link (improve a signal-to-noise ratio of the control link, and provide a HARQ retransmission mode or ARQ retransmission mode for a control link between the NCTN and a next node), and improve a signal-to-noise ratio of a backhaul link.

It should be noted that, control information on the control link at the NCTN node may be forwarded to a target NCTN-MT or NCRN-MT in a transparent forwarding mode (which is referred to as a manner 1 subsequently). Alternatively, the information is forwarded to the target NCTN-MT or NCRN-MT (that is, the NCTN-MT or the NCRN-MT is considered as a UE, as shown in FIG. 19) in a regenerative forwarding mode of the NCTN (which is referred to as a manner 2 subsequently).

In the manner 1, the gNB sends the control information to the NCTN-MT/NCRN-MT. When the control information passes through the NCTN, the NCTN sends a resource corresponding to the NCTN to a next node in a transparent forwarding mode. In the manner 2, the gNB sends the control information to the NCTN-MT/NCRN-MT. When the control information passes through the NCTN, the NCTN-MT decodes the information for regenerative forwarding, re-encodes the information, and forwards the information to the next node via the NCTN-DU.

It can be learned that the manner 1 is easy to implement and has low complexity. In the manner 2, transmission of the control information has higher responsibility, and can reduce a retransmission delay.

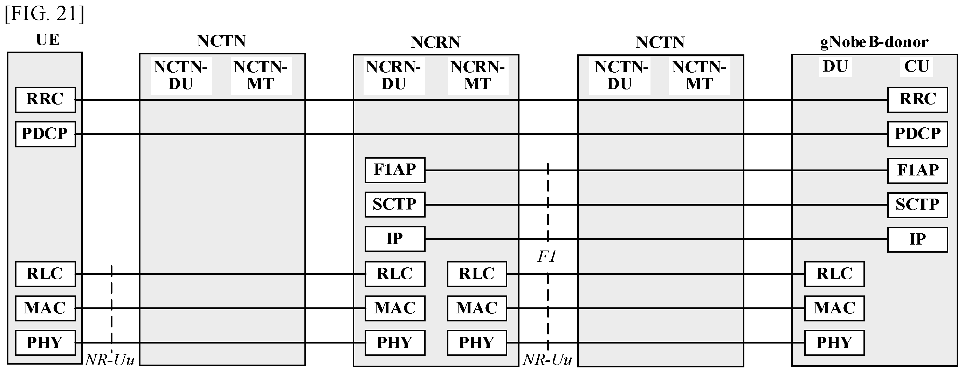

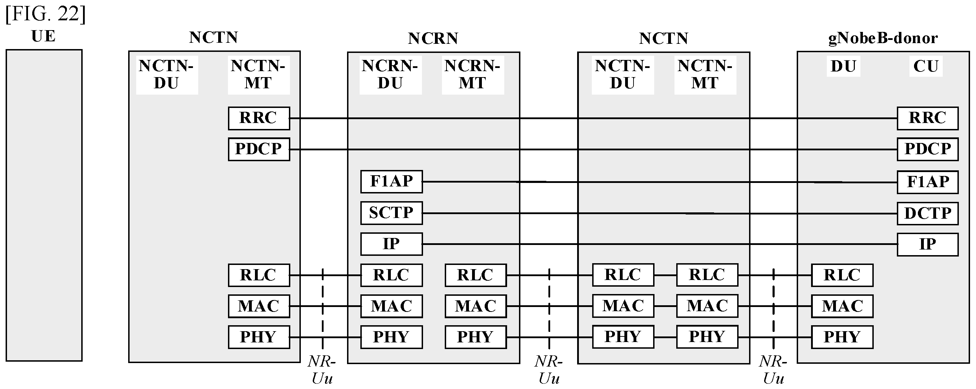

FIG. 21 and FIG. 22 are control plane protocol stacks. FIG. 21 is a diagram of a control plane protocol stack from a perspective of a UE according to an embodiment of this application. Compared with the user plane protocol stack in FIG. 19, an SDAP layer is replaced with an RRC layer, a GTP-U layer is replaced with an F1AP layer, and a UDP layer is replaced with an SCTP layer (only a diagram of a user plane protocol stack is provided in the following embodiment, and a corresponding control plane protocol stack can be obtained by replacing the foregoing layers). F1AP, SCTP, and IP layers are inherited from CU-DU separation, and provide a channel for data transmission between a CU and a DU.

FIG. 22 is a diagram of a control plane protocol stack from a perspective of an NCTN-MT according to an embodiment of this application. Compared with the user plane protocol stack in FIG. 19, an SDAP layer is replaced with an RRC layer, a GTP-U layer is replaced with an F1AP layer, and a UDP layer is replaced with an SCTP layer (only a diagram of a user plane protocol stack is provided in the following embodiment, and a corresponding control plane protocol stack can be obtained by replacing the foregoing layers). F1AP, SCTP, and IP layers are inherited from CU-DU separation, and provide a channel for data transmission between a CU and a DU.

It should be understood that FIG. 19 and FIG. 20 each show a diagram of a user plane protocol stack, and FIG. 21 and FIG. 22 each show a diagram of a control plane protocol stack.

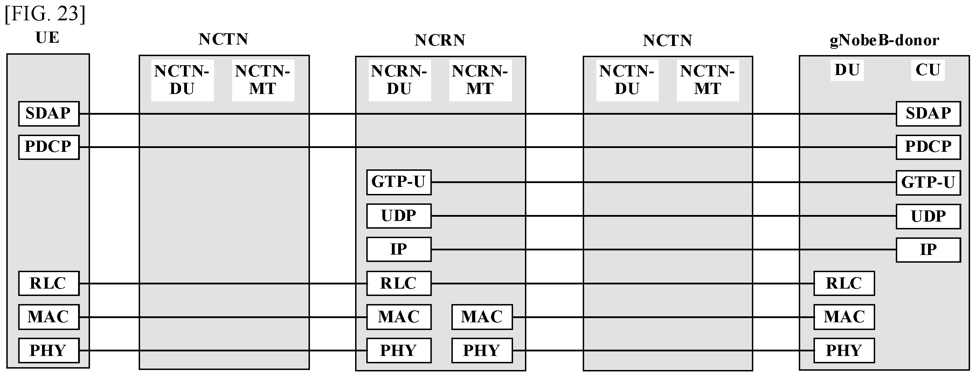

FIG. 23 is a diagram of another user plane protocol stack according to an embodiment of this application. During regenerative forwarding, an NCRN supports forwarding to a MAC layer. That is, it can be learned that a forwarding delay in FIG. 23 is lower than that in FIG. 19. However, in FIG. 19, the regenerative forwarding to the RLC layer is supported, that is, the ARQ retransmission and HARQ retransmission are supported, and reliability is higher. Compared with FIG. 19, FIG. 23 supports the forwarding to the MAC layer, that is, has lower complexity and a lower processing delay.

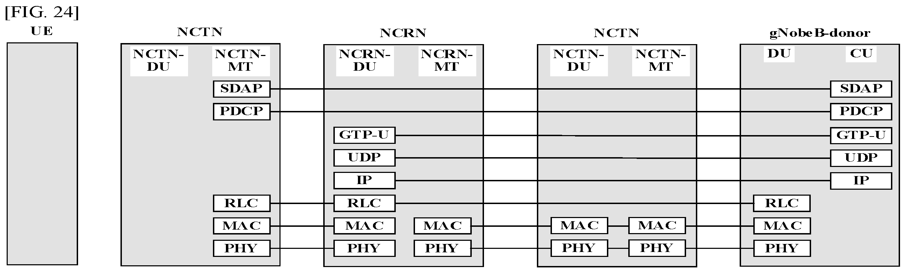

FIG. 24 is a diagram of another user plane protocol stack according to an embodiment of this application. Compared with FIG. 20, during regenerative forwarding, an NCRN and an NCTN support forwarding to a MAC layer. That is, it can be learned that a forwarding delay in FIG. 24 is lower than that in FIG. 20. However, in FIG. 20, the regenerative forwarding to the RLC layer is supported, that is, the ARQ retransmission and HARQ retransmission are supported, and reliability is higher. Compared with FIG. 20, FIG. 24 supports the forwarding to the MAC layer, that is, has lower complexity and a lower processing delay.

It can be learned that, as shown in FIG. 23 and FIG. 24, compared with FIG. 20 and FIG. 21, during regenerative forwarding of the intermediate node, data is forwarded to the MAC layer instead of the RLC layer, so that forwarding complexity and a forwarding delay can be reduced.

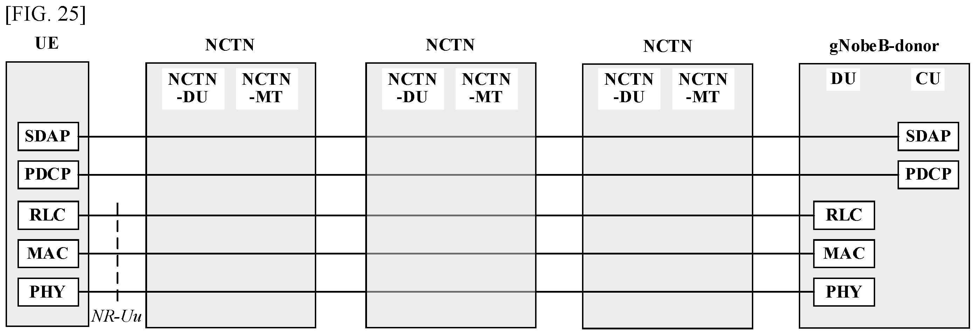

It should be understood that the relay nodes shown in FIG. 19 to FIG. 24 include an NCTN and an NCRN. When the relay nodes are all NCTNs, FIG. 24 and FIG. 25 are diagrams of user plane protocol stacks.

FIG. 25 is a diagram of another user plane protocol stack according to an embodiment of this application. FIG. 25 is a diagram of a user plane protocol stack from a perspective of a terminal device, and transmission is implemented via a backhaul link. An NCTN in FIG. 25 performs transparent transmission processing (forwarding) on data transmitted between a UE and a gNB.

It should be understood that, an NCTN in FIG. 25 performs transmission of the data transmitted between the UE and the gNB in a full transparent transmission mode. The method provided in this application is also applicable to an existing NCR scenario, that is, a person skilled in the art can easily apply the method provided in this application to an NCR.

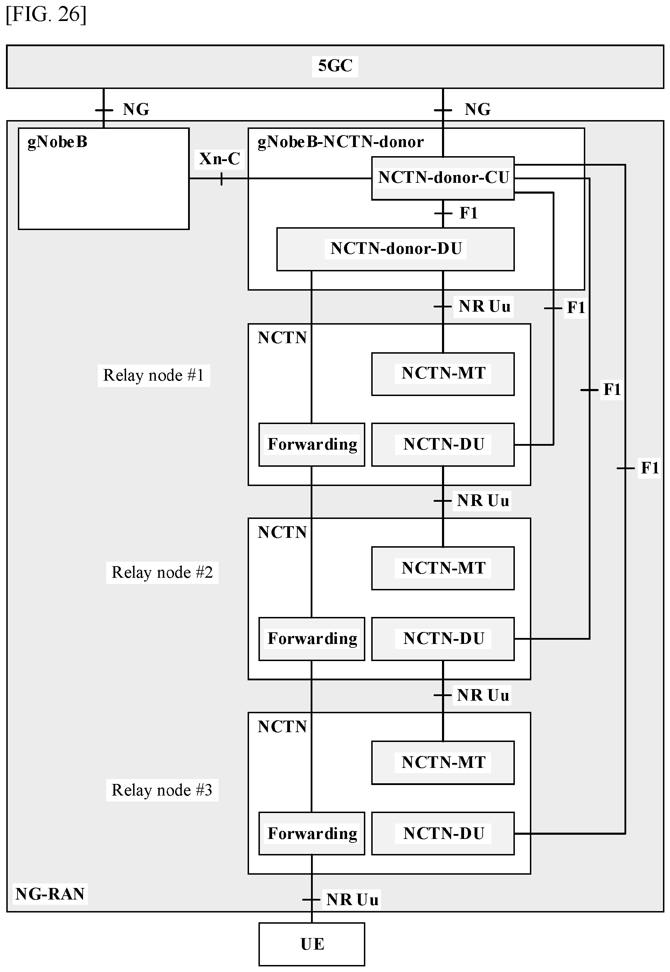

FIG. 26 is a diagram of a specific network architecture in which all forwarding relays are NCTNs. An F1 interface is used for a connection between a gNobeB-donor-CU and an NCTN-DU, and is inherited from an F1 interface between a DU and a CU. A Uu air interface is used for a connection between a donor-DU and an NCTN-MT and a connection between the NCTN-DU and the NCTN-MT. An NCTN-MT of a relay node #1 in FIG. 25 accesses the gNobeB as a terminal device, to establish a Uu interface connection. An NCTN-MT of a relay node #2 accesses an NCTN-DU of the relay node #1 as a terminal device, to establish a Uu interface connection. An NCTN-MT of a relay node #3 accesses an NCTN-DU of the relay node #2 as a terminal device, to establish a Uu interface connection. The relay node #1, the relay node #2, and the relay node #3 transparently forward the data between the gNB and the UE.

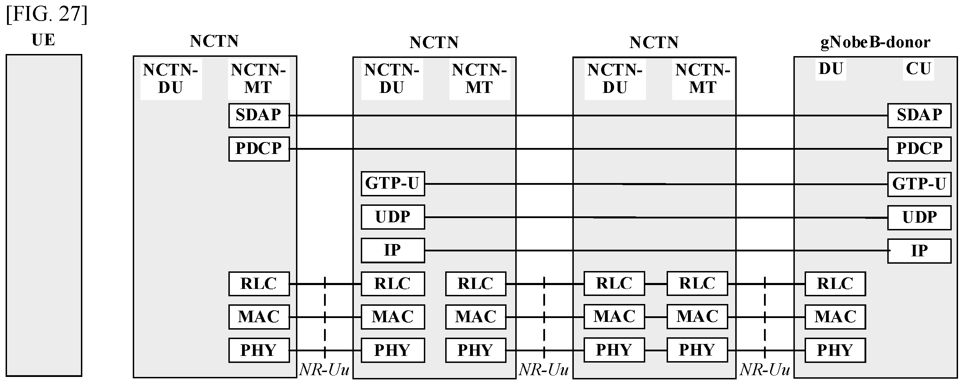

FIG. 27 is a diagram of another user plane protocol stack according to an embodiment of this application. FIG. 27 is a diagram of a user plane protocol stack from a perspective of an NCTN-MT. The user plane protocol stack may be considered as a control link. An NCTN in FIG. 27 performs regenerative forwarding processing on data transmitted between a UE (a relay apparatus) and a gNB. During regenerative forwarding, the NCTN supports forwarding to an RLC layer, that is, supports ARQ and HARQ retransmission, and reliability is higher.

FIG. 19 to FIG. 27 respectively show diagrams of forwarding modes of user plane protocol stacks and control panel protocol stacks. A transparent forwarding relay node includes an MT, a DU, and a transparent forwarding function, that is, may implement transparent forwarding and regenerative forwarding. A transparent forwarding node and the regenerative forwarding node can support forwarding to an RCL layer, or support forwarding to a MAC layer. Forwarding to the RLC layer is supported, so that reliability of a control link can be improved, and a signal-to-noise ratio of a backhaul link can be increased. Forwarding to the MAC layer is supported, so that complexity of transmission can be reduced, a cost requirement can be reduced, and a transmission delay can be reduced

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, the methods and the operations implemented by the terminal device may alternatively be implemented by a part (for example, a chip or a circuit) used in the terminal device, and the methods and the operations implemented by the first relay node may alternatively be implemented by a part (for example, a chip or a circuit) used in the second relay node.

The foregoing mainly describes the solutions provided in embodiments of this application from a perspective of interaction between network elements. It may be understood that, to implement the foregoing functions, each network element like a transmit end device or a receive end device includes a corresponding hardware structure and/or software module for performing the functions. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of the transmit end device or the receive end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

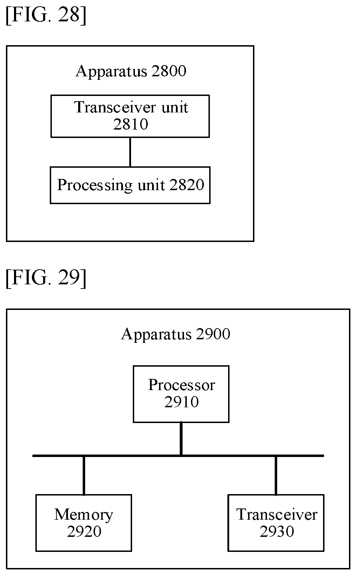

FIG. 28 is a diagram of a structure of a communication apparatus according to an embodiment of this application.

The apparatus 2800 includes a transceiver unit 2810 and a processing unit 2820. The transceiver unit 2810 may be configured to implement a corresponding communication function. The processing unit 2820 may be configured to process data.

Optionally, the transceiver unit 2810 may also be referred to as a communication interface or a communication unit, and includes a sending unit and/or a receiving unit. The transceiver unit 2810 may be a transceiver (including a transmitter and/or a receiver), an input/output interface (including an input interface and/or an output interface), a pin, a circuit, or the like. The transceiver unit 2810 may be configured to perform a sending step and/or a receiving step in the foregoing method embodiments.

Optionally, the processing unit 2820 may be a processor (may include one or more processors), a processing circuit having a processor function, or the like, and may be configured to perform a step in the foregoing method embodiments other than sending and receiving.

Optionally, the apparatus 2800 further includes a storage unit. The storage unit may be a memory, an internal storage unit (for example, a register or a cache), an external storage unit (for example, a read-only memory or a random access memory), or the like. The storage unit is configured to store instructions. The processing unit 2820 executes the instructions stored in the storage unit, to cause the communication apparatus to perform the foregoing method.

In a design, the apparatus 2800 may correspond to the first relay node in the foregoing method embodiment, or may be a component (for example, a chip) of the first relay node.

The apparatus 2800 may implement steps or procedures performed by the first relay node in the foregoing method embodiment. The transceiver unit 2810 may be configured to perform receiving/sending-related operations of the first relay node in the foregoing method embodiment. The processing unit 2820 may be configured to perform processing-related operations of the first relay node in the foregoing method embodiment.

In a possible implementation, the transceiver unit 2810 is configured to receive routing information and time-frequency resource information. The routing information is used to determine a second relay node, and the time-frequency resource information indicates a time-frequency resource for data transmission between the first relay node and the second relay node. The processing unit 2820 is configured to perform the data transmission with the second relay node based on the time-frequency resource information. The communication apparatus is a terrestrial relay node or a satellite relay node, and the second relay node is a terrestrial relay node or a satellite relay node.

In another design, the apparatus 2800 may correspond to the second relay node in the foregoing method embodiment, or may be a component (for example, a chip) of the second relay node.

In a possible implementation, the transceiver unit 2810 is configured to receive routing information and time-frequency resource information. The routing information is used to determine that the communication apparatus is a last relay node in transmission between a network device and a terminal device. The transceiver unit 2810 is configured to send second information to the terminal device or the network device based on the time-frequency resource information. The second information includes information transmitted between the network device and the terminal device. The communication apparatus is a terrestrial relay node or a satellite relay node.

When the apparatus 2800 is configured to perform the method in FIG. 14 to FIG. 27, the transceiver unit 2810 may be configured to perform steps of receiving and sending information in the method, and the processing unit 2820 may be configured to perform another processing step in the method other than receiving and sending information.

It should be understood that a specific process in which the units perform the foregoing corresponding steps is described in detail in the foregoing method embodiment. For brevity, details are not described herein again.

It should be understood that the apparatus 2800 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described functions. In an optional example, a person skilled in the art may understand that the apparatus 2800 may be specifically the first relay node in the foregoing embodiment, and may be configured to perform procedures and/or steps corresponding to the first relay node in the foregoing method embodiment. To avoid repetition, details are not described herein again.

The apparatus 2800 in each of the foregoing solutions has a function of implementing corresponding steps performed by the device (for example, the first relay node or the second relay node) in the foregoing method. The function may be implemented by hardware, or may be implemented by hardware executing corresponding software. The hardware or software includes one or more modules corresponding to the functions. For example, the transceiver unit may be replaced by a transceiver machine (for example, the sending unit in the transceiver unit may be replaced by a transmitter, and the receiving unit in the transceiver unit may be replaced by a receiver machine), and another unit, for example, the processing unit, may be replaced by a processor, to separately perform receiving/sending operations and related processing operations in the method embodiment.

In addition, the transceiver unit 2810 may alternatively be a transceiver circuit (for example, may include a receiving circuit and a sending circuit), and the processing unit may be a processing circuit.

It should be noted that the apparatus in FIG. 28 may be a network element or a device in the foregoing embodiment, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 29 is a diagram of a structure of a communication apparatus 2900 according to an embodiment of this application. The communication apparatus 2900 shown in FIG. 29 includes a processor 2910, a memory 2920, and a transceiver 2930. The processor 2910 is coupled to the memory 2920, and is configured to execute instructions stored in the memory 2920, to control the transceiver 2930 to send a signal and/or receive a signal.

It should be understood that the processor 2910 and the memory 2920 may be combined into one processing apparatus, and the processor 2910 is configured to execute program code stored in the memory 2920 to implement the foregoing functions. During specific implementation, the memory 2920 may alternatively be integrated into the processor 2910, or be independent of the processor 2910. It should be understood that, the processor 2910 may correspond to each processing unit in the foregoing communication apparatus, and the transceiver 2930 may correspond to each receiving unit and sending unit in the foregoing communication apparatus.

It should be further understood that, the transceiver 2930 may include a receiver (or referred to as a receiver machine) and a transmitter (or referred to as a transmitter machine). The transceiver may further include one or more antennas. The transceiver may alternatively be a communication interface or an interface circuit.

Specifically, the communication apparatus 2900 may correspond to the devices (the first relay node or the second relay node) in FIG. 14 to FIG. 27 according to embodiments of this application. The communication apparatus 2900 may include units of the method performed by the first relay node in FIG. 14 to FIG. 27, or units of the method performed by the second relay node. It should be understood that a specific process in which the units perform the foregoing corresponding steps is described in detail in the foregoing method embodiment. For brevity, details are not described herein again.

When the communication apparatus 2900 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing method can be implemented by using a hardware integrated logic circuit in a processor, or by using instructions in a form of software. The steps of the method disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing method in combination with the hardware of the processor. To avoid repetition, details are not described herein again.

It should be noted that, the processor in embodiments of this application may be an integrated circuit chip, and has a signal processing capability. In an implementation process, steps in the foregoing method embodiment can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing method in combination with the hardware of the processor.

This application further provides a computer-readable medium, storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or a part of the foregoing embodiments may be implemented by using software, hardware, firmware, or any combination thereof. When the software is used for implementation, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

Terms such as "part", "module", and "system" used in this specification are used to indicate computer-related entities, hardware, firmware, combinations of hardware and software, software, or software being executed. For example, the part may be, but is not limited to, a process that runs on a processor, a processor, an object, an executable file, an execution thread, a program, and/or a computer. As illustrated by using figures, both a computing device and an application that runs on the computing device may be parts. One or more parts may reside within the process and/or the execution thread, and a part may be located on one computer and/or distributed between two or more computers. In addition, these parts may be executed from various computer-readable media that store various data structures. For example, the parts may communicate by using a local and/or remote process and based on, for example, a signal having one or more data packets (for example, data from two parts interacting with another part in a local system, a distributed system, and/or across a network such as an internet interacting with another system by using the signal).

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. A communication method, comprising:
receiving, by a first relay node, routing information and time-frequency resource information, wherein the routing information is used to determine a second relay node, and the time-frequency resource information indicates a time-frequency resource for data transmission between the first relay node and the second relay node; and
performing, by the first relay node, the data transmission with the second relay node based on the time-frequency resource information, wherein
the first relay node is a terrestrial relay node or a satellite relay node, and the second relay node is a terrestrial relay node or a satellite relay node.

2. The method according to claim 1, wherein the routing information comprises: identification information of a destination relay node and identification information of a forwarding path; identification information of a forwarding path; identification information of the second relay node; satellite ephemeris information of the second relay node; position information of the second relay node; a forwarding port of the first relay node, wherein the forwarding port corresponds to the second relay node.

3. The method according to claim 1 or 2, wherein performing, by the first relay node, the data transmission with the second relay node based on the time-frequency resource information comprises:
determining, by the first relay node, a forwarding mode, wherein the forwarding mode comprises a regenerative forwarding mode or a transparent forwarding mode; and
performing, by the first relay node, the data transmission with the second relay node based on the forwarding mode and the time-frequency resource information.

4. The method according to claim 3, wherein determining, by the first relay node, the forwarding mode comprises:
determining, by the first relay node, the forwarding mode based on first information, wherein the first information comprises the forwarding mode;
or
determining, by the first relay node, the forwarding mode by performing blind detection and/or decoding on a time-frequency resource of second information, wherein
the second information is information for the data transmission.

5. The method according to claim 4, wherein performing, by the first relay node, the data transmission with the second relay node based on the forwarding mode and the time-frequency resource information comprises:
performing, by the first relay node, the data transmission with the second relay node based on the time-frequency resource information and the transparent forwarding mode and/or the regenerative forwarding mode.

6. The method according to claim 4 or 5, wherein
when the forwarding mode is the transparent forwarding mode, performing, by the first relay node, the data transmission with the second relay node based on the forwarding mode and the time-frequency resource information comprises:
performing, by the first relay node, transmission of the second information with the second relay node based on the transparent forwarding mode and the time-frequency resource information; and
when the forwarding mode is the regenerative forwarding mode, performing, by the first relay node, the data transmission with the second relay node based on the forwarding mode and the time-frequency resource information comprises:
performing, by the first relay node, transmission of third information with the second relay node based on the regenerative forwarding mode and the time-frequency resource information, wherein the third information is determined based on the second information and the regenerative forwarding mode.

7. The method according to any one of claims 1 to 6, wherein the method further comprises:
receiving, by the first relay node, a forwarding direction, wherein the forwarding direction comprises an uplink forwarding direction or a downlink forwarding direction; and
performing, by the first relay node, the data transmission with the second relay node based on the time-frequency resource information comprises:
performing, by the first relay node, the data transmission with the second relay node based on the time-frequency resource information and the forwarding direction.

8. The method according to claim 7, wherein the routing information comprises routing information of the first relay node, and the method further comprises:
performing, by the first relay node, the transmission of the second information based on the routing information, the time-frequency resource, and the forwarding mode, wherein the second information is the information for the data transmission, wherein the routing information further comprises any one of the following: a beam position index, position information of a terminal device, identification information of the terminal device, an index number of the terminal device, a beam index, a reference position, or angle information of a beam.

9. The method according to any one of claims 1 to 8, wherein the first relay node comprises a mobile termination MT, a distributed unit DU, and a transparent forwarding unit, wherein
the MT is configured to establish a first link, wherein the first link is used by the MT to connect to a DU of an upper-level device, and the first link is a control link; the DU is configured to establish a second link, wherein the second link is used to provide access for an MT of a lower-level device, and the second link is a control link; and the transparent forwarding unit is configured to provide a transparent forwarding function.

10. The method according to any one of claims 1 to 8, wherein the first relay node comprises a mobile termination MT and a distributed unit DU, wherein
the MT is configured to establish a third link, wherein the third link is used to connect to a distributed unit of an upper-level device, and the third link is a control link; and the DU is configured to establish a fourth link, wherein the fourth link is used to provide access for a mobile termination MT of a lower-level device or the terminal device, and the fourth link is a control link or an access link.

11. The method according to claim 9 or 10, wherein the first relay node supports a regenerative forwarding mode at a radio link control RLC layer; or the first relay node supports a regenerative forwarding mode at a MAC layer.

12. A communication method, comprising:
receiving, by a second relay node, routing information and time-frequency resource information, wherein the routing information is used by the second relay node to determine that the second relay node is a last relay node in transmission between a network device and a terminal device; and
sending, by the second relay node, second information to the terminal device or the network device based on the time-frequency resource information, wherein the second information comprises information transmitted between the network device and the terminal device, wherein
the second relay node is a terrestrial relay node or a satellite relay node.

13. The method according to claim 12, wherein the routing information comprises: identification information of a destination relay node and identification information of a forwarding path; identification information of the second relay node; satellite ephemeris information of the second relay node; position information of the second relay node; an end flag for stopping forwarding between relay nodes.

14. The method according to claim 12 or 13, wherein the method further comprises:
receiving, by the second relay node, a forwarding direction, wherein the forwarding direction comprises an uplink forwarding direction or a downlink forwarding direction; and
sending, by the second relay node, the second information to the terminal device or the network device based on the time-frequency resource information comprises:
sending, by the second relay node, the second information to the terminal device or the network device based on the time-frequency resource information and the forwarding direction.

15. The method according to claim 14, wherein the routing information comprises routing information of the first relay node, and the method further comprises:
sending, by the second relay node, the second information to the terminal device based on the routing information, the time-frequency resource, and the forwarding mode, wherein the routing information further comprises one or more of the following: a beam position index, position information of the terminal device, identification information of the terminal device, an index number of the terminal device, a beam index, a reference position, or angle information of a beam.

16. The method according to any one of claims 12 to 15, wherein the second relay node comprises a mobile termination MT, a distributed unit DU, and a transparent forwarding unit, wherein
the MT is configured to establish a first link, wherein the first link is used by the MT to connect to a distributed unit of an upper-level device, and the first link is a control link; the DU is configured to establish a second link, wherein the second link is used to provide access for a mobile termination MT of a lower-level device, and the second link is a control link; and the transparent forwarding unit is configured to provide a transparent forwarding function.

17. The method according to any one of claims 12 to 15, wherein the second relay node comprises a mobile termination MT and a distributed unit DU, wherein
the MT is configured to establish a third link, wherein the third link is used to connect to a distributed unit of an upper-level device, and the third link is a control link; and the DU is configured to establish a fourth link, wherein the fourth link is used to provide access for a mobile termination MT of a lower-level device or the terminal device, and the fourth link is a control link or an access link.

18. The method according to claim 16 or 17, wherein the second relay node supports a regenerative forwarding mode at a radio link control RLC layer; or the second relay node supports a regenerative forwarding mode at a MAC layer.

19. A communication apparatus, comprising:
a transceiver unit, configured to receive routing information and time-frequency resource information, wherein the routing information is used to determine a second relay node, and the time-frequency resource information indicates a time-frequency resource for data transmission between the first relay node and the second relay node; and
a processing unit, configured to perform the data transmission with the second relay node based on the time-frequency resource information, wherein
the communication apparatus is a terrestrial relay node or a satellite relay node, and the second relay node is a terrestrial relay node or a satellite relay node.

20. The apparatus according to claim 19, wherein the routing information comprises: identification information of a destination relay node and identification information of a forwarding path; identification information of a forwarding path; identification information of the second relay node; satellite ephemeris information of the second relay node; position information of the second relay node; a forwarding port of the first relay node, wherein the forwarding port corresponds to the second relay node.

21. The apparatus according to claim 19 or 20, wherein
the processing unit is further configured to determine a forwarding mode based on first information, wherein the forwarding mode comprises a regenerative forwarding mode or a transparent forwarding mode; and
the processing unit is further configured to perform the data transmission with the second relay node based on the forwarding mode and the time-frequency resource information.

22. The apparatus according to claim 21, wherein
the first information comprises the forwarding mode, and the processing unit is further configured to determine the forwarding mode based on the first information; or
the processing unit is further configured to determine the forwarding mode by performing blind detection and/or decoding on a time-frequency resource of second information, wherein
the second information is information for the data transmission.

23. The apparatus according to claim 22, wherein
the processing unit is further configured to perform the data transmission with the second relay node based on the time-frequency resource information and the transparent forwarding mode and/or the regenerative forwarding mode.

24. The apparatus according to claim 22 or 23, wherein
when the forwarding mode is the transparent forwarding mode, the processing unit is further configured to perform transmission of the second information with the second relay node based on the transparent forwarding mode and the time-frequency resource information; and
when the forwarding mode is the regenerative forwarding mode, the processing unit is further configured to perform transmission of third information with the second relay node based on the regenerative forwarding mode and the time-frequency resource information, wherein the third information is determined based on the second information and the regenerative forwarding mode.

25. The apparatus according to any one of claims 19 to 24, wherein
the transceiver unit is further configured to receive a forwarding direction, wherein the forwarding direction comprises an uplink forwarding direction or a downlink forwarding direction; and
the processing unit is further configured to perform the data transmission with the second relay node based on the time-frequency resource information and the forwarding direction.

26. The apparatus according to claim 25, wherein the routing information comprises
routing information of the communication apparatus; and
the processing unit is further configured to perform the transmission of the second information based on the routing information, the time-frequency resource, and the forwarding mode, wherein the second information is the information for the data transmission, wherein
the routing information further comprises any one of the following: a beam position index, position information of a terminal device, identification information of the terminal device, an index number of the terminal device, a beam index, or a reference position.

27. The apparatus according to any one of claims 19 to 26, wherein the communication apparatus further comprises a mobile termination MT, a distributed unit DU, and a transparent forwarding unit, wherein
the MT is configured to establish a first link, wherein the first link is used by the MT to connect to a DU of an upper-level device, and the first link is a control link; the DU is configured to establish a second link, wherein the second link is used to provide access for an MT of a lower-level device, and the second link is a control link; and the transparent forwarding unit is configured to provide a transparent forwarding function.

28. The apparatus according to any one of claims 19 to 27, wherein the communication apparatus further comprises the mobile termination MT and the distributed unit DU, wherein
the MT is configured to establish a third link, wherein the third link is used to connect to a distributed unit of an upper-level device, and the third link is a control link; and the DU is configured to establish a fourth link, wherein the fourth link is used to provide access for a mobile termination MT of a lower-level device or the terminal device, and the fourth link is a control link or an access link.

29. The apparatus according to claim 27 or 28, wherein the communication apparatus supports a regenerative forwarding mode at a radio link control RLC layer; or the communication apparatus supports a regenerative forwarding mode at a MAC layer.

30. A communication apparatus, comprising:
a transceiver unit, configured to receive routing information and time-frequency resource information, wherein the routing information is used to determine that the communication apparatus is a last relay node in transmission between a network device and a terminal device; and
a processing unit, configured to send second information to the terminal device or the network device based on the time-frequency resource information, wherein the second information comprises information transmitted between the network device and the terminal device, wherein
the communication apparatus is a terrestrial relay node or a satellite relay node.

31. The apparatus according to claim 30, wherein the routing information comprises: identification information of a destination relay node and identification information of a forwarding path; identification information of the communication apparatus; satellite ephemeris information of the communication apparatus; position information of the communication apparatus; an end flag for stopping forwarding between relay nodes.

32. The apparatus according to claim 30 or 31, wherein
the transceiver unit is further configured to receive a forwarding direction, wherein the forwarding direction comprises an uplink forwarding direction or a downlink forwarding direction; and
the processing unit is further configured to send the second information to the terminal device or the network device based on the time-frequency resource information and the forwarding direction.

33. The apparatus according to claim 32, wherein the routing information comprises routing information of the terminal device; and
the processing unit is further configured to send the second information to the terminal device based on the routing information, wherein the routing information further comprises one or more of the following: a beam position index, position information of the terminal device, identification information of the terminal device, an index number of the terminal device, a beam index, or a reference position.

34. The apparatus according to any one of claims 30 to 33, wherein the communication apparatus comprises a mobile termination MT, a distributed unit DU, and a transparent forwarding unit, wherein
the MT is configured to establish a first link, wherein the first link is used by the MT to connect to a distributed unit of an upper-level device, and the first link is a control link; the DU is configured to establish a second link, wherein the second link is used to provide access for a mobile termination MT of a lower-level device, and the second link is a control link; and the transparent forwarding unit is configured to provide a transparent forwarding function.

35. The apparatus according to any one of claims 30 to 33, wherein the communication apparatus comprises a mobile termination MT and a distributed unit DU, wherein
the MT is configured to establish a third link, wherein the third link is used to connect to a distributed unit of an upper-level device, and the third link is a control link; and the DU is configured to establish a fourth link, wherein the fourth link is used to provide access for a mobile termination MT of a lower-level device or the terminal device, and the fourth link is a control link or an access link.

36. The apparatus according to claim 34 or 35, wherein the communication apparatus supports a regenerative forwarding mode at a radio link control RLC layer; or the communication apparatus supports a regenerative forwarding mode at a MAC layer.

37. A communication apparatus, comprising:
a processor, wherein the processor is coupled to a memory, and the processor is configured to invoke computer program instructions stored in the memory, to perform the method according to any one of claims 1 to 11, or perform the method according to any one of claims 12 to 18.

38. A chip, comprising a processor and a communication interface, wherein the communication interface is configured to: receive data and/or information, and transmit the received data and/or information to the processor; and the processor processes the data and/or information, to perform the method according to any one of claims 1 to 11 or the method according to any one of claims 12 to 18.

39. A computer-readable storage medium, wherein the computer-readable storage medium stores instructions, and when the instructions are run on a computer, the computer is caused to perform the method according to any one of claims 1 to 11 or the method according to any one of claims 12 to 18.

40. A computer program product, wherein the computer-readable storage medium stores instructions, and when the instructions are run on a computer, the computer is caused to perform the method according to any one of claims 1 to 11 or the method according to any one of claims 12 to 18.
